# EUROPEAN PATENT APPLICATION

(11) **EP 4 708 092 A2**
(43) Date of publication of application: **11.03.2026**
(21) Application number: 25195667.8
(22) Date of filing: 13.08.2025
(51) Int. Cl.: G06F 21/44, H04L 9/08, H04L 9/32, H04L 9/40

(54) **PEER TO PEER NETWORK INTERCONNECTING PROOF OF ORIGIN-ENABLED NODES WITH APPLICATION-LEVEL INTERFACE**

(30) Priority: 13.08.2024 US 202418803022
(71) Applicant: Crossbar, Inc., Santa Clara CA 95054 (US)
(72) Inventor: Jo, Sung Hyun, Sunnyvale, CA, 94087 (US)
(74) Representative: Samson & Partner Patentanwälte mbB

(57) **Abstract**

A secure peer-to-peer network is implemented with computing devices over unsecure network connections. Each computing device can include or be coupled to a proof of origin hardware. The proof of origin hardware can be validated by publicly available data, such as a trusted server. **In** addition, the proof of origin hardware can facilitate cryptographic key generation to facilitate encryption of communications at the computing devices, to secure such communications over the unsecure network connections. The proof of origin hardware can include hardware acceleration circuitry to provide network services, such as cryptocurrency transactions, blockchain validation computations, and even blockchain services integrating smart contracts, token exchange, survey services leveraging proof of origin data, distributed data backup, distributed computing, among others.

## Description

### INCORPORATION BY REFERENCE

U.S. Patent Application No. 18/753,784 filed June 25, 2024 and titled "BACKUP AND RECOVERY SYSTEM AND METHODS FOR CRYPTOCURRENCY HARDWARE WALLET", U.S. Patent Application No. 18/406,899 filed January 08, 2024 and titled "CRYPTOCURRENCY HARDWARE WALLET ON MONOLITHIC CHIP WITH COMMON PHYSICAL COUNTERMEASURES AND SECURE MEMORY", U.S. Patent Application No. 18/218,948 filed July 06, 2023 and titled "SECURE MICROCONTROLLER WITH UNIFIED RRAM AND SUB-MODULE ADDRESSING AND ACCESS CONTROL", U.S. Patent Application No. 18/200,318 filed May 22, 2023 and titled "UTILIZING TWO-TERMINAL RESISTIVE SWITCHING MEMORY TO STORE VALIDATION DATA OF AN INTEGRATED CIRCUIT DEVICE", and U.S. Patent Application No. 17/708,491 filed March 30, 2022 titled "DYNAMIC HOST ALLOCATION OF PHYSICAL UNCLONABLE FEATURE OPERATION FOR RESISTIVE SWITCHING MEMORY" are hereby incorporated by reference herein in their respective entireties and for all purposes.

### TECHNICAL FIELD

The subject disclosure relates generally to improved utility and reliability for secure digital transactions, and as one illustrative example: providing device-level proof of origin for computing nodes within a decentralized network.

### BACKGROUND

Security in electronic communication is relevant at micro and macro scales, from operations of components within a single die to network communications of communicatively interconnected computing devices. Moreover, communication security is relevant at various scales in between the micro and macro levels, as well as for unconventional (or even heretofore unknown) inter-operations of electronic devices. Although variations exist, probably the most common application in the modern context for securing electronic communication is with cryptographic algorithms.

As a general characteristic, cryptographic algorithms tend to leverage highly complex computational schemes that make breaking the algorithm practically impossible, though in most cases not theoretically impossible. The greater the complexity of the cryptographic algorithm the more practical the difficulty in breaking it. For this statement to be true, however, certain mathematical assumptions that the algorithm relies upon must also hold true. One such assumption is the true randomness of a numbering scheme leveraged by an algorithm. Where systematic patterns exist within the numbering scheme or the mechanism utilized to generate (random) numbers, an algorithm is more vulnerable to being compromised. To this end, the national institute on standards and technology (NIST) maintains tests for randomness of number generators for use in cryptography applications (see, *e.g.,* A. Rukhin, et al., "A Statistical Test Suite for Random and Pseudorandom Number Generators for Cryptographic Applications", NIST, vol. 800-22, no. rev 1a, p. 131, 2010).

One potential vulnerability for secure communications is the memory utilized to store secure data. Hacking techniques can leverage knowledge about how a memory operates at a cell level or an array level, how a memory stores bits of data, physical effects of operations performed on the memory and so forth to infer information about secure data stored in the memory. Such knowledge rarely yields the secure data in and of itself. However, even where only minor correlation about some bits of the stored data can be correctly inferred, the theoretical or mathematical security of stored data can be undermined. This in turn can reduce the difficulty of compromising the secure data by brute force calculations or other conventional means.

Another potential vulnerability for secure communications is the authenticity of manufactured components of a communication device. Some hacking techniques attempt to substitute a trusted device or component with a compromised replacement. The compromised replacement may be positioned within a validation network, to improperly report a compromised device as valid, or within an edge device participating in a secure communication, within an intermediary device such as a network router, hub, or the like, or other link in a network. Where a security modality affecting a network communication involves a compromised device, the network communication can be undermined.

With the utility available through network computing, in personal and organizational communication, digital commerce, financial asset exchange and so on, the need to facilitate security for network computing will persist. In light of the above, the Assignee of the present disclosure continues to develop and pursue practical applications and integrated circuit devices to enhance the utility and security of network communications over public and private networks.

### SUMMARY

The following presents a simplified summary of the specification in order to provide a basic understanding of some aspects of the specification. This summary is not an extensive overview of the specification. It is intended to neither identify key or critical elements of the specification nor delineate the scope of any particular embodiments of the specification, or any scope of the claims. Its purpose is to present some concepts of the specification in a simplified form as a prelude to the more detailed description that is presented in this disclosure.

The present disclosure provides proof of origin data for nodes in a network. The proof of origin data can facilitate distributed and decentralized authentication of network computing devices. This enables respective nodes to validate interactions with other computing devices on the network, even communications functioning at the application level of the open systems interconnection (OSI) network model. This in turn enables a node to operate as a server in a client-server interaction on the network, a client in a second client-server interaction, or a combination of the foregoing, since proof of origin data for a node can be utilized by any other node to authenticate communications with and transactions involving that node. The proof of origin data can therefore serve as real-time (or substantially real-time) proof of trust data for any node in the network (acting as a server), upon request by another node (acting as a client), and *vice versa.* In various embodiments, proof of origin data can be provided by an integrated circuit (IC) device coupled to a node. The proof of origin data can be unique (or substantially unique) to the IC device, and serve to encrypt and decrypt communications to and from the node coupled to the IC device. The communications can be application level communications, including communications involving digital transactions (*e.g*., peer-to-peer cryptocurrency transactions, digital token transactions, digital contract transactions, and so on), interactions with traditional application server devices, interactions with a blockchain network (including various blockchain layers), and the like, as well as combinations of the foregoing.

The present disclosure provides an electronic communication apparatus. The electronic communication apparatus can comprise a communication interface facilitating communication by way of a network with a remote device, the communication including application layer interaction between the communication interface and the remote device. The electronic communication apparatus can further comprise a processor for executing instructions pertaining to implementing the communication and a storage medium containing the instructions. Moreover, the electronic communication apparatus can comprise an internal communication bus coupled to the storage medium and to the processor facilitating data and command communication between the processor and the storage medium and an application layer communication module including security logic configured to facilitate secure communications between the remote device and the electronic communication apparatus as part of the application layer interaction. Additionally, the electronic communication apparatus can comprise an integrated circuit device containing proof of origin data that is unique or substantially unique to the integrated circuit device, wherein the integrated circuit device is coupled to the internal communication bus and provides the proof of origin data to the processor that utilizes the proof of origin data in conjunction with executing the security logic of the application layer communication module for identifying the electronic communication apparatus with the remote device and for securing the application layer interaction of the communication.

The disclosure further provides an integrated circuit device comprising a physical communication interface and a microcontroller unit including a processor communicatively coupled to the physical communication interface. Moreover, the integrated circuit device can comprise a secure element comprising embedded memory including a non-volatile memory containing proof of origin data unique or substantially unique to the secure element and can comprise a secure element bus exclusively coupling the secure element with the microcontroller unit. Still further, the integrated circuit device can comprise an access control configured to limit access to the proof of origin data at the secure element for communication between the secure element and the microcontroller unit on the secure element bus. Moreover, the integrated circuit device is fabricated on a single monolithic chip and the secure element bus provides secure intra-chip communication within the integrated circuit device between the microcontroller unit and the secure element.

The disclosure further provides a computing network comprising a first computing device having a remote network communication interface and a short-range network connection. The computing network can further comprise an integrated circuit device comprising proof of origin data generated from resistive switching memory cells embedded within the integrated circuit device by way of a physical unclonable function (PUF), wherein the integrated circuit device is communicatively coupled to the first computing device by way of the short-range network connection. In addition, the computing network can comprise a second computing device having a second remote network communication interface and a second short-range network connection. Moreover, the computing network can comprise a second integrated circuit device comprising second proof of origin data generated from second resistive switching memory cells embedded within the second integrated circuit device by way of the PUF or a second PUF, wherein the second integrated circuit device is communicatively coupled to the second computing device by way of the second short-range network connection. Further, the computing network can comprise one or more interconnection devices communicatively connected to the remote network communication and to the second remote network communication interface to communicatively connect the first computing device with the second computing device. In addition to the foregoing, the first computing device receives a query at the remote network communication interface for proof of possession from the second computing device and replies to the query with the proof of origin data or data derived from the proof of origin data.

The following description and the drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Various aspects or features of this disclosure are described with reference to the drawings, wherein like reference numerals are used to refer to like elements throughout. In this specification, numerous specific details are set forth in order to provide a thorough understanding of this disclosure. It should be understood, however, that certain aspects of the subject disclosure may be practiced without these specific details, or with other methods, components, materials, *etc.* In other instances, well-known structures and devices are shown in block diagram form to facilitate describing the subject disclosure.
Figure 1 illustrates a block diagram of an example integrated circuit (IC) device formed on a monolithic semiconductor die according to aspects of the disclosed embodiments;
Figure 2 depicts a diagram of an example remote connection facilitating application layer communication with proof of origin data, in aspects of disclosed embodiments;
Figure 3 illustrates a block diagram of an example proof of origin (PoO) device on a monolithic chip physically couple-able to a computing device, in an aspect of the disclosure;
Figure 4 depicts a block diagram of an example cryptocurrency chip providing PoO data for secure application layer communication among remote computing devices;
Figure 5 depicts a block diagram of example atomic hardware acceleration circuitry for secure communication in a decentralized computing network, in an aspect(s);
Figure 6 illustrates a diagram of a sample decentralized application layer communication network with PoO for respective devices, in further disclosed aspects;
Figure 7 depicts a diagram of a peer-to-peer network with respective PoO and integrated application services coupled to a block chain network, in still further embodiments;
Figure 8 illustrates a flowchart of an example method for providing decentralized PoO for application layer network communication such as a block chain, in other aspects;
Figure 9 illustrates a block diagram of an example electronic operating environment in accordance with one or more disclosed embodiments;
Figure 10 depicts a block diagram of an example computing environment for implementing one or more embodiments of the present disclosure.

### DETAILED DESCRIPTION

### INTRODUCTION

Threats to security and validity of electronic devices by way of hacking and illicit access are widespread. Mechanisms to secure and authenticate an electronic device and inter-device network communication - particularly over unsecure networks - include cryptography, virtual private networking, combinations of these and others. In the event that electronic devices engaged in network communication are properly authenticated, the communication channel between the devices may still be vulnerable. This is often addressed by encrypting data before transmitting important communications onto a network. Virtual private networks (VPNs) can utilize a tunneling protocol, which can include encryption, between an electronic device and a communication network, between two networks, and so forth. But hacking efforts continue along with advancements in security, and seek to identify and exploit weaknesses in electronic devices and electronic communications. Need for a robust and comprehensive resistance to hacking has been one factor slowing the development of applications pertaining to value exchange over unsecure networks, like the Internet.

As one example, access to an electronic device involved in a network communication can be utilized to compromise the communication and even other devices involved in the communication. To illustrate, illicit modification or substitution of a component of an electronic device (*e.g.,* a nonvolatile memory, a firmware, an encryption key, *etc.*), can effectively compromise the electronic device itself. Moreover, fabrication techniques utilized to create a chip, while cost effective and efficient, can leave inherent vulnerabilities in the chip itself. As another illustration, internal device packaging that facilitates communication between fabricated components that constitute an electronic device (*e.g*., inter-chip bonding that also facilitates inter-chip communication, or printed circuit board communication lines connecting chips, *etc.*) can be vulnerable to illicit direct physical access that compromises communication within a device itself. Similarly, physical access to a chip can be leveraged to retrieve secret security data used to encrypt communications, thereby compromising those communications. Also, network communications can potentially be compromised by accessing components of a network, sub-components thereof, or the data transmitted therein. Several core deficiencies in electronic devices and electronic communication are often exploited to compromise security in digital transactions.

Embodiments of the present disclosure include an electronic device constructed to be resistant to illicit physical access. In some examples, the electronic device can be constructed to include a secure element that has a physical countermeasure (PCM) shield and is resistant to hacking. Secret data - such as proof of origin data, root of trust data, a cryptocurrency key, secret user data, sensitive data, and so on - can be stored in a memory embedded within the secure element and protected by the PCM shield. Inclusion of a secure element can deter some hacking and illicit access attempts, but others can still be effective if communication pathways between the secure element and a processor, device controller, memory structure utilized by the processor, and so on, are not protected by the PCM shield. This can occur, for instance, in bonded chip devices in which the secure element is formed on one chip that is bonded to a second chip containing the processor or device controller and memory utilized by the processor/controller. If a controller or processing device accessing the secure element is unprotected by the PCM shield, both the controller and communication link between the controller and secure element become points of vulnerability.

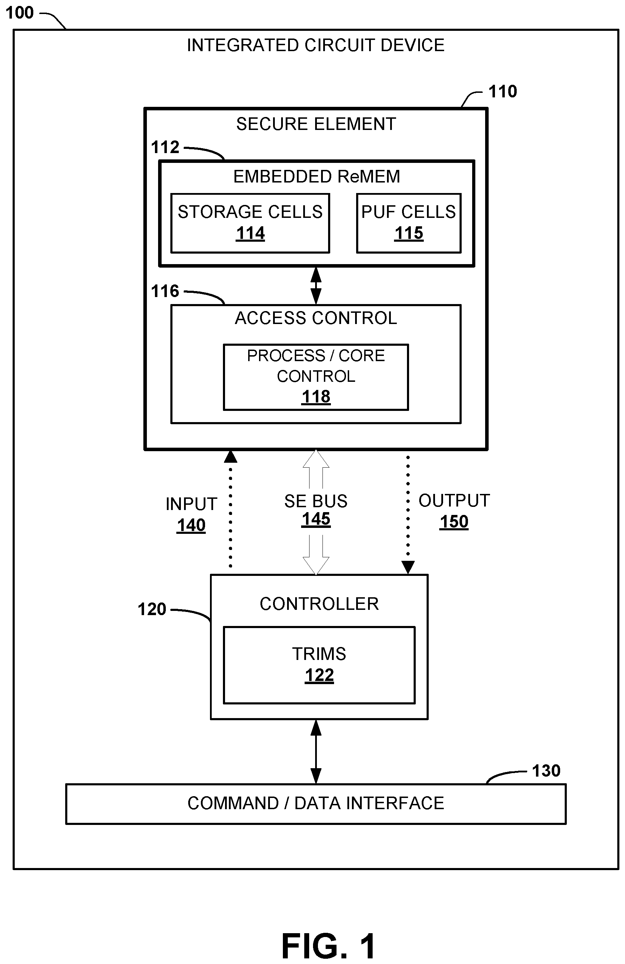

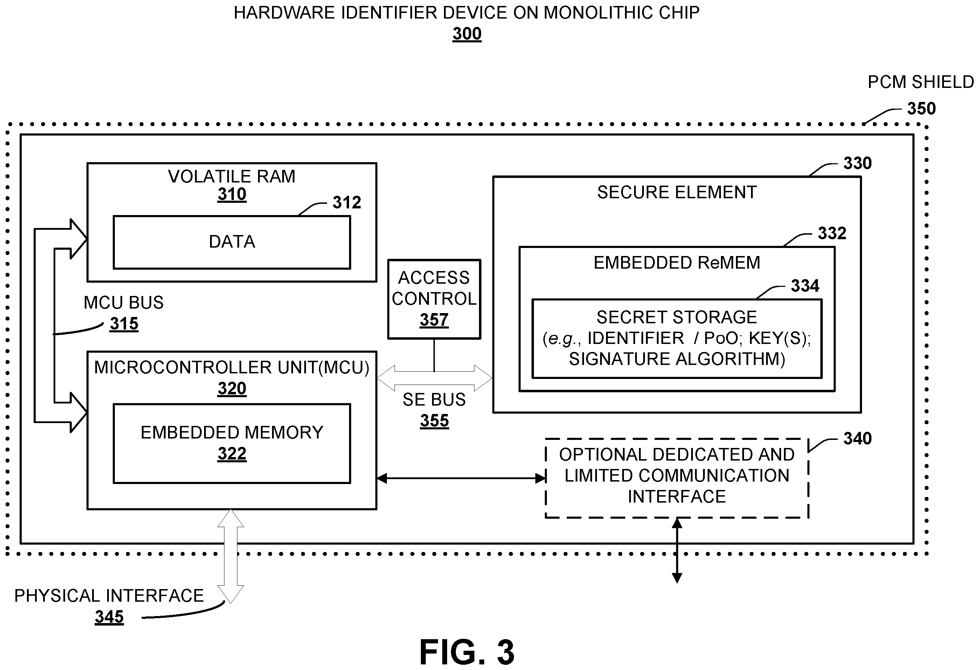

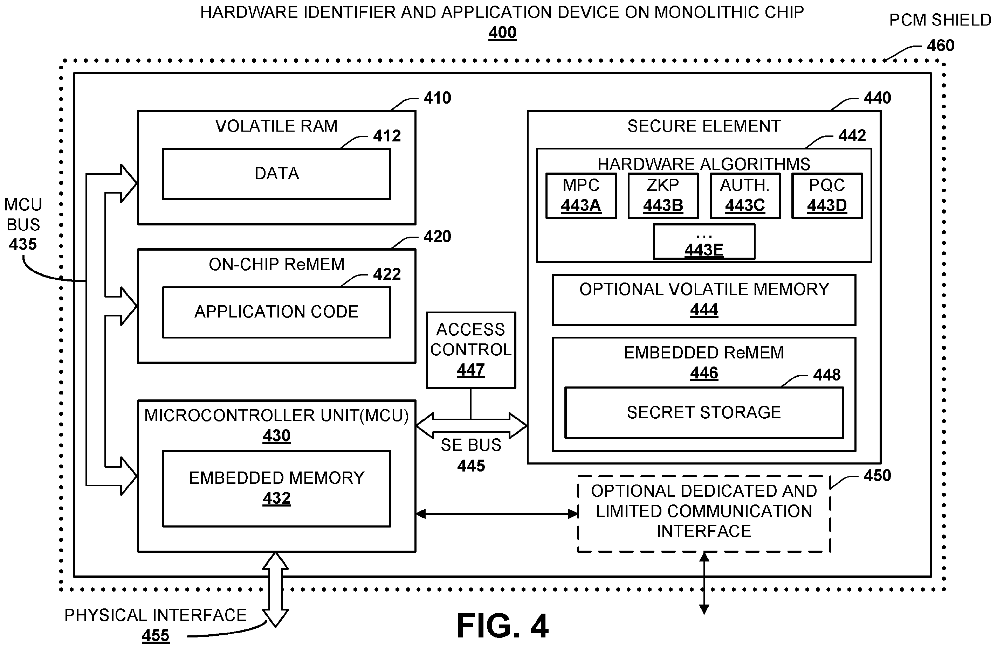

In addition to electronic device structural vulnerabilities, many secure element devices suffer from archaic single-key security architectures and do not have the computational capacity or memory to take advantage of sophisticated architectures such as multi-party computation (MPC). Single-key security also imposes a threat of data or asset loss (*e.g.*, digital asset(s)) through loss of a single security key, or loss of a single electronic device storing the security key. Embodiments of the present disclosure can leverage a sophisticated MPC encryption and decryption framework that stores security data in embedded resistive memory having robust resistance to illicit physical access. In the context of network interactions, highly secure proof of origin data available at respective network nodes can be utilized for decentralized and distributed authentication of nodes in a network. The proof of origin data can be stored on monolithic integrated circuit (IC) devices having robust PCM shields (*e.g*.*,* see Figures 3 and 4, *infra*)*.* In some embodiments, the proof of origin data can be authenticated at a trusted server device of a manufacturer of the monolithic IC device(s) (*e.g.*, see U.S. Patent Application No. 18/200,318 filed May 22, 2023 and titled "UTILIZING TWO-TERMINAL RESISTIVE SWITCHING MEMORY TO STORE VALIDATION DATA OF AN INTEGRATED CIRCUIT DEVICE", incorporated by reference hereinabove). In still other embodiments, the proof of origin data can be generated from a physical unclonable function (PUF) implemented with resistive switching memory embedded within the monolithic ID device(s) (*e.g.*, see Figure 1, below, as well as U.S. Patent Application No. 17/708,491 filed March 30, 2022 and titled "DYNAMIC HOST ALLOCATION OF PHYSICAL UNCLONABLE FEATURE OPERATION FOR RESISTIVE SWITCHING MEMORY", incorporated by reference hereinabove).

Disclosed embodiments include a secure IC device in a single monolithic chip structure storing proof of origin data that can be utilized to validate a computing device coupled with the secure IC device. The computing device can operate on an unsecured network and provide the proof of origin data to validate the computing device as a trusted node on the unsecured network. In at least one non-limiting aspect of the disclosed embodiments, validation of the proof of origin data can be implemented at a trusted server device maintained by a manufacturer of the IC device, though other modalities for validating unique or substantially unique proof of origin data are within the scope of the present disclosure. In some embodiments, the proof of origin data can be utilized to secure communications involving the computing device on the unsecured network. The proof of origin data can be utilized to generate security data (*e.g.*, a public-private key pair, or other suitable cryptographic architecture) that can encrypt and decrypt the secure communications of the computing device, as one example among others. In some aspects of the disclosure, the proof of origin data can be utilized at least in part by the computing device in generating a MPC key share with one or more other computing devices connected to the unsecured network. The MPC key share(s) can be utilized to encrypt or decrypt communications on the unsecured network in such aspects.

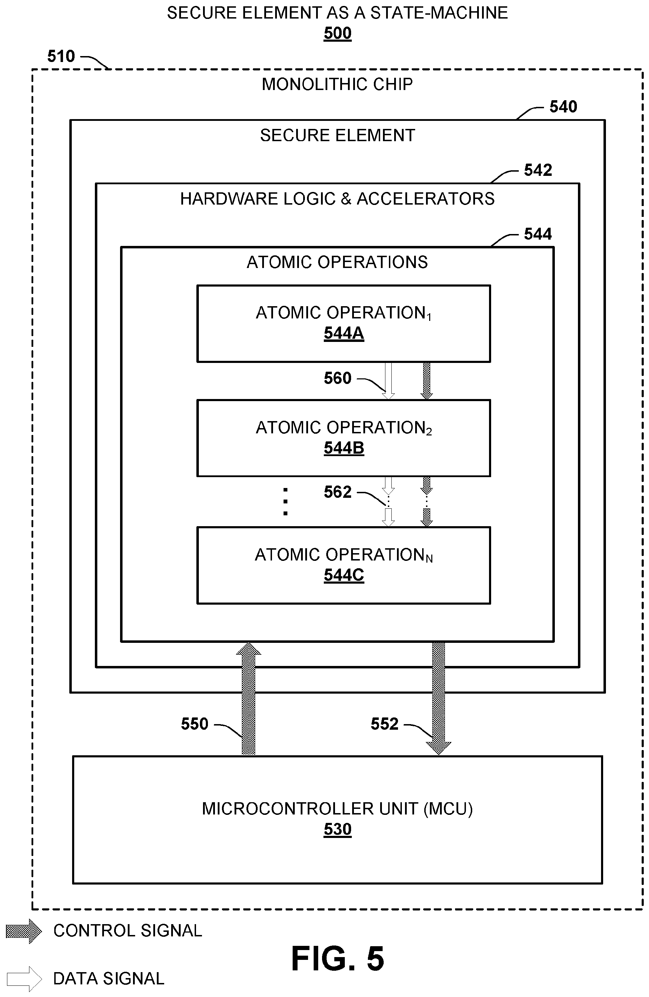

In some disclosed embodiments, a disclosed IC device can include hardware logic to accelerate cryptographic algorithm computations, such as generating secret data, generating MPC security data, participating in encryption and decryption of data with a MPC key share(s), or other computationally intense algorithms (*e.g.*, Figure 4, *infra*)*.* In aspects of such embodiments, the hardware logic can include atomic logic sequences that can be organized in different sequences and combinations to effect a variety of algorithmic computations. These atomic logic sequences can significantly increase the range and scope of algorithms the IC device can compute while minimizing chip area consumed by the hardware acceleration logic circuitry (*e.g.*, see Figure 5, *infra*)*.*

As utilized herein, the term "substantially" and other relative terms or terms of degree (*e.g.*, about, approximately, roughly, and so forth) are intended to have the meaning specified explicitly in conjunction with their use herein, or a meaning which can be reasonably inferred by one of ordinary skill in the art, or a reasonable variation of a specified quality(ies) or quantity(ies) that would be understood by one of ordinary skill in the art by reference to this entire specification (including the knowledge of one of ordinary skill in the art as well as material incorporated by reference herein). As an example, a term of degree could refer to reasonable manufacturing tolerances about which a specified quality or quantity could be realized with fabrication equipment. Thus, as a specific illustration, though non-limiting, for an element of a resistive switching device expressly identified as having a dimension of about 50 angstroms (A), the relative term "about" can mean reasonable variances about 50 A that one of ordinary skill in the art would anticipate the specified dimension of the element could be realized with commercial fabrication equipment, industrial fabrication equipment, laboratory fabrication equipment, or the like, and is not limited to a mathematically precise quantity (or quality). In other examples, a term of degree could mean a variance of +/- 0-3%, +/- 0-5%, or +/- 0-10% of an expressly stated value, where suitable to one of ordinary skill in the art to achieve a stated function or feature of an element disclosed herein. In still other examples, a term of degree could mean any suitable variance in quality(ies) or quantity(ies) that would be suitable to accomplish an explicitly disclosed function(s) or feature(s) of a disclosed element. Accordingly, the subject specification is by no means limited only to specific qualities and quantities disclosed herein, but includes all suitable variations of a specified quality(ies) or quantity(ies) reasonably conveyed to one of ordinary skill in the art by way of the context disclosed herein.

### OVERVIEW

Figure 1 illustrates a block diagram of an example integrated circuit (IC) device 100 for an electronic device (*e.g.*, a secure computing device, a secure element, a digital hardware wallet on monolithic chip, and so forth) according to one or more embodiments of the present disclosure. IC device 100 includes a secure element 110 comprising an array(s) 112 of embedded resistive memory (ReMEM). ReMEM can include, for example, two-terminal resistive-switching memory cells, though other magnetic switching or charge-trapping two-terminal memory cells or even three-terminal memory cells can be utilized instead or in addition, in some disclosed embodiments. For instance, array 112 of ReMEM can include, as non-limiting examples, a magnetic switching memory (*e.g*., spin torque transfer magnetic memory, among others), a phase change resistive switching memory, an oxygen vacancy resistive switching memory, a conductive bridge switching memory, a metal oxide resistive switching memory, a sub-oxide resistive switching memory, a chalcogenide memory, a carbon nanotube memory, an organic memory, and resistive filamentary switching memory, among others known in the art or reasonably conveyed to one of ordinary skill in the art by way of the context provided herein.

Array(s) 112 of embedded ReREM 112 can include resistive switching memory cells, and different portions of the resistive switching memory cells can be characterized for different memory or data generation functions. Example functions of resistive switching memory cells of array(s) 112 can include physical unclonable function (PUF) data generation, memory storage or true random number generation (TRNG) generation. Memory storage functions can include one-time programmable (OTP) data storage and many-time programmable (MTP) data storage (also referred to as rewritable or program/erase) and are shown collectively as storage cells 114. Memory cells utilized to generate or store PUF data or TRNG data are shown collectively as PUF cells 115. In one or more embodiments, multiple memory cells can be aggregated to define a differential PUF bit (or a differential TRNG bit), or a single cell can define a PUF bit (or TRNG bit) in other embodiments. These modalities are also embodied within PUF cells 115. Array(s) 112 of embedded ReMEM can be characterized for other types of memory cell functions not specifically depicted in Figure 1, where suitable.

As shown, array(s) 112 can be a unified memory structure, whereas in other embodiments, a different array (having a distinct access control 116) can define separate memory cells. In yet another embodiment, each of storage cells 114 and PUF cells 115 can be embodied in distinct resistive switching arrays having respective access controls 116. More generally, one or more of: storage cells 114 and PUF cells 115 can be separate memory structures from array(s) 112 of embedded ReMEM. For example, OTP cells can be located externally to array(s) 112 on a different portion (not shown) of a monolithic semiconductor chip. Alternatively, in other embodiments, other storage cells 114 (or PUF cells 116) can be at least in part included within array(s) 112 of memory. For instance, storage cells 114 can be embodied as an array among a set of arrays that form array(s) 112 of embedded ReMEM, a block of memory within such an array(s) 112, a set of pages within one or more blocks or arrays, or other suitable arrangement.

Access control 116 can be configured to selectively permit or limit access to array(s) 112 or portions of array(s) 112, based on stored conditions. In an embodiment, access control 116 can be implemented in conjunction with a secure element bus (SE bus) 145 providing electronic communication with secure element 110 (*e.g.*, see MCU bus 315 or SE bus 355 of Figure 3, *infra*)*.* Different buses can have different access control logic or stored conditions in various embodiments. For instance, access control 116 associated with an array(s) 112 of a disclosed secure element can have a core/process control 118 configured to limit a processor, a core of a processor, a process or thread running on a processor, or the like, which can access the array(s) 112 of embedded ReMEM associated with secure element 110, or which can access portions of the array(s) 112 (*e.g*., discriminating between access to storage cells 114 and from PUF cells 115). In contrast, another access control 116 (not depicted) associated with a bus facilitating electronic communication with an array(s) 112 for storing application code, or with a volatile memory for maintaining operating data of an application in execution, can have few or no core/process control 118 access restrictions for the processor(s), core(s), processes or process threads implemented within a monolithic semiconductor chip such as IC device 100. Access control 116 can also enforce access limitations to array(s) 112 for external commands or data received at a command / data interface 130 (see below).

Controller 120 is provided to perform operations on array(s) 112 of embedded ReMEM. Suitable operations can include memory operations, such as reading data from, writing data to, overwriting data at, and so on, subsets of array(s) 112. Memory operations can include processes such as program (write), read, overwrite, erase, and so forth, suitable for operation of storage cells 114 (including, *e.g*., operations suitable for many-time programmable cells and operations suitable for one-time programmable cells). Still further, memory operations can include processes for generating PUF data on individual PUF cells 115, or on a group(s) of PUF cells 115 defining a differential PUF bit. Instructions for implementing memory operations according to the various characterizations can be stored in trim instructions 122. Memory cell operations can be implemented in response to a command from an external device (by way of command/data interface 130, for example), which can be implemented by a manufacturer post-fabrication of integrated circuit device 100, by a distributor or reseller of integrated circuit device 100 after fabrication, by an end-user as part of a chip calibration routine, or as a dynamic process during operation of integrated circuit device 100, according to various embodiments. As an illustrative example, a host device communicatively coupled to integrated circuit device 100 can issue a host command to generate PUF data. In at least some disclosed embodiments, a host command to generate PUF data can be part of a distributed MPC data generation algorithm, where an MPC key, one or more shares of the MPC key or a suitable combination of the foregoing are generated at PUF cells 115 with a PUF data generation operation. In various embodiments, trim instructions 122 can store protocols to implement memory operations for storage cells 114 and PUF cells 115 consistent with those characterizations.

Also illustrated in integrated circuit device 100 is an input(s) 140 and output(s) 150. In some embodiments, input(s) 140 can include (or provide a pathway for) data to be stored within array(s) 112 of embedded ReMEM, such as storage cells 114 or PUF cells 115. Output(s) 150 can output data stored within resistive memory devices of array(s) 112. In some embodiments, output(s) 150 can output data that results from computations utilizing data stored in ReMEM cells.

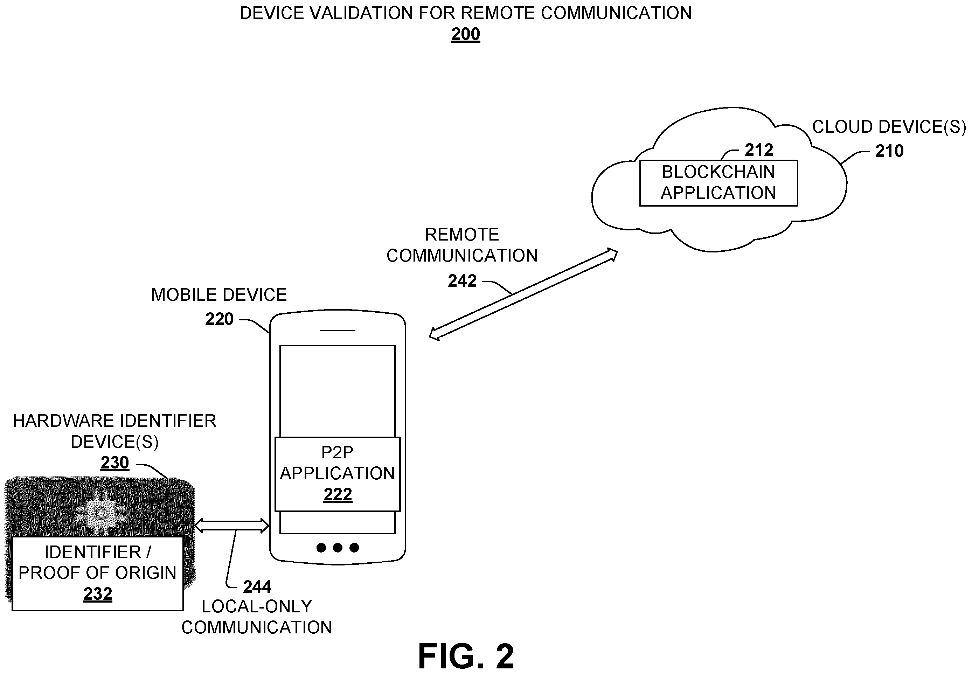

A command/data interface 130 is provided to receive memory commands from an external device and respond to those commands. Further, data to be written to array(s) 112 can be received by way of command/data interface 130, and data output from array(s) 112 can be provided over command/data interface 130. Command/data interface 130 can include a direct physical interconnect to an electronic device or a short range wireless interconnect in one or more embodiments (*e.g.*, see local-only communication 244 of Figure 2, *infra*), or can include a limited and direct communication over a wide area network in other embodiments (*e.g*., a connection limited to accessing a predetermined IP address (or set of addresses) of a trusted server device, such as a backup key recovery device, and so forth).

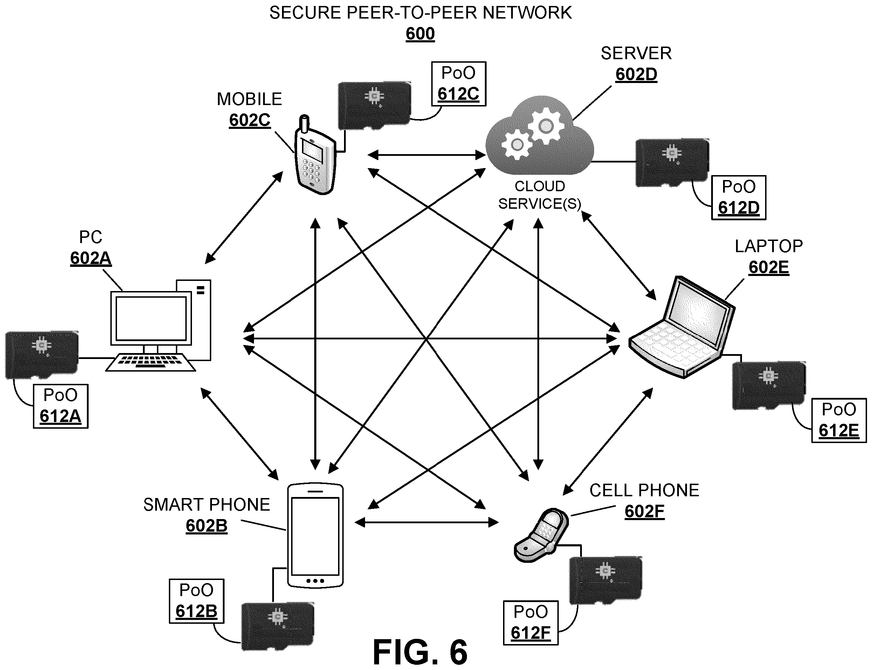

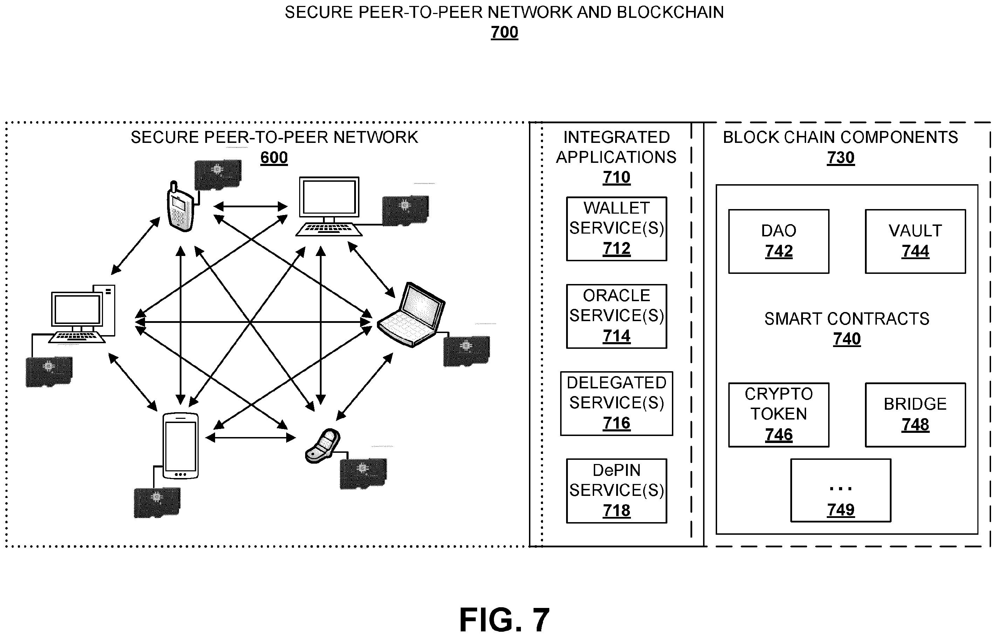

Figure 2 illustrates a diagram of an example communication environment 200 that provides device validation for a remote communication 242, according to various embodiments of the present disclosure. In some embodiments, communication environment 200 can also provide secure communications over remote communication 242, even where remote communication 242 includes an unsecure network. Communication environment 200 can even facilitate secure communications for unsecure edge devices, mitigating or avoiding a need to limit participation in communication environment 200 only to trusted edge devices. For instance, communication environment 200 can facilitate device validation and secure communication for a wide area peer-to-peer (P2P) interconnection among untrusted devices utilizing an unsecure network(s), such as the Internet, a public network(s), an unsecure private network(s), and the like (see also, *e.g.,* Figures 6 and 7, *infra*)*.*

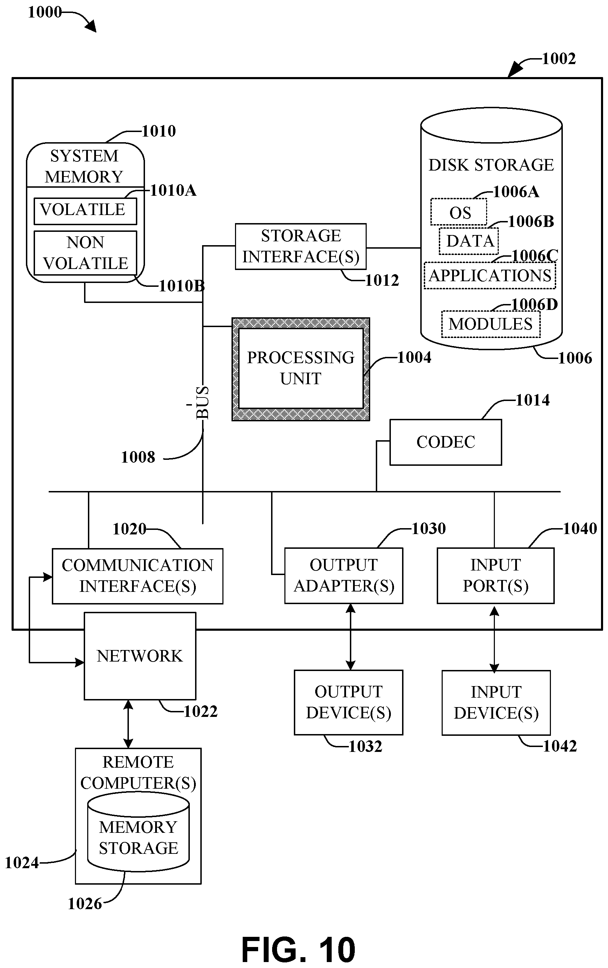

Remote communication 242 can be embodied by any suitable network(s) connection, including a public network, a private network, a peer-to-peer (P2P) network, or other suitable network, or a suitable combination of the foregoing. Remote communication 242 can include wired or wireless connectivity to a local area network (LAN) or larger networks, *e.g*., a wide area network (WAN) which may connect to a global communications network, such as the Internet. As examples, remote communication 242 can include a suitable public, private or commercial cellular voice or data network(s) (*e.g*., second generation (2G), third generation (3G), fourth generation (4G), 4G long term evolution (LTE), fifth generation (5G), and other iterations of cellular networks), a microwave communication network(s) (*e.g*., WiMAX), optical laser communication network(s), a satellite voice or data network(s), Bluetooth^{®} or other near field communication (NFC) wireless network(s), a Wi-Fi technology network(s) such as IEEE 802.11a, b, g, n, and others, an infrared communication network(s), or others, or various combinations of the foregoing. Remote communication 242 can alternatively, or in addition include wired network connections, including a wired network connection(s) to a global communications network such as the Internet. Examples can include an Ethernet connection(s) (*e.g.*, Cat 3, Cat 5, Cat 5e, Cat 6, Cat 6A, *etc.*), coaxial cable connection(s), digital subscriber line connection(s), or other wired networks, or suitable combinations of the foregoing. Still further, various combinations of wired and wireless networks can be incorporated within remote communication 242 (see also, *e.g.*, Figure 10, *infra*)*.*

Communication environment 200 depicts a mobile device 220 communicatively connected to a cloud device(s) 210 by way of remote communication 242. Cloud device(s) 210 can be a server device connected to the Internet, as one example. Cloud device(s) 210 can also include multiple server devices connected to the Internet, although only a single cloud device(s) 210 is depicted with Figure 2 (*e.g.*, see Figure 6).

Mobile device 220 can be communicatively connected to a hardware identifier device(s) 230 by way of a local-only communication 244. Local-only communication 244 can be a physical connection, or a wireless connection. The physical connection can be of any suitable form factor, such as a removable media device (*e.g.*, a USB removable media, a memory card removable media, such as CompactFlash, Memory Stick, Secure Digital (SD), among others, and various iterations such as mini-SD, micro-SD, *etc.*), a peripheral device connection (*e.g.*, a USB peripheral connection, a serial connection, a parallel connection), and so forth. The wireless connection can be a local area network (LAN) such as a WiFi connection, or can be a personal area network, a NFC connection, a Bluetooth connection, and others.

Hardware identifier device(s) 230 can contain identifier data, as referred to herein as proof of origin data 232, that is unique or substantially unique to hardware identifier device(s) 230. Proof of origin data 232 can be utilized at least in part by cloud device(s) 210 to validate hardware identifier device(s) 230 (and optionally mobile device 220, *e.g.,* by proxy). Accordingly, hardware identifier device(s) 230 can serve as a verifiable and trusted hardware device (*e.g.*, a hardware blockchain device, a hardware cryptocurrency wallet device, a hardware digital currency or digital asset device, and so on), obviating a need for mobile device 220 itself to be a trusted device. In one or more embodiments, hardware identifier device(s) 230 can include embedded ReMEM. The embedded ReMEM can be leveraged to generate PUF data, unique or substantially unique to the embedded ReMEM of hardware identifier device(s) 230, to serve as the proof of origin data 232. This PUF / proof of origin data 232, being unique to the embedded ReMEM of hardware identifier device(s) 230, can establish proof of possession of hardware identifier device(s) 230 and proof of origin of communications secured with the proof of origin data 232.

In further embodiments, mobile device 220 (or hardware identifier device(s) 230) can operate in conjunction with cloud device(s) 210 to generate MPC security data for securing communications between such devices over remote communication 242. As an example, a MPC algorithm can be employed by mobile device 220 (or hardware identifier device(s) 230) in conjunction with cloud device(s) 210 (and optionally one or more additional devices - not depicted, but see Figure 6, *infra*) to generate respective security data shares. The security data shares can then be utilized to encrypt and decrypt data at respective edge devices (*e.g*., mobile device 220 and cloud device(s) 210), to secure the transmission of encrypted data over remote communication 242. Proof of origin data 232 therefore enables cloud device(s) 210 to validate hardware identifier device(s) 230 as a trusted device, and participate with mobile device 220 even in application level communications that could otherwise compromise cloud device(s) 210. As a result, high-level applications such as client-server interactions can be implemented seamlessly between cloud device(s) 210 and mobile device 220, with cloud device(s) 210 serving as a client and mobile device 220 as a server (*e.g*., utilizing a P2P application configured to control mobile device 220 in a server role) in a first client-server application, and cloud device(s) 210 serving as a server and mobile device 220 as a client in a second client-server application. Described differently, communication environment 200 can facilitate a seamless interaction and collaboration of edge devices over unsecured networks with edge devices interchangeably serving as client devices, server devices, or a combination thereof. This can maximize the efficiency and effectiveness of decentralized hardware in network communication in providing application services among the decentralized hardware devices.

As an illustrative example, cloud device(s) 210 can include application programming embodying a blockchain application 212. Blockchain application 212 can be configured to cause cloud device(s) 210 to operate as a server device providing blockchain data services over remote communication 242. Mobile device 220 can include a P2P application 222 configured to cause mobile device 220 to operate as a server device that provides third party application data in conjunction with the blockchain services. Examples of third party application data services can include smart contract services leveraging the blockchain, network survey application services coupled with a smart contract service(s) leveraging the blockchain, data storage redundancy applications, decentralized physical infrastructure (DePIN) applications, delegated or distributed computing applications, privacy-securing applications (*e.g*., generating PUF proof of origin data for use by third party devices connected to remote communication 242), or the like, or suitable combinations of the foregoing.

Figure 3 depicts a block diagram of an example hardware identifier device 300 according to aspects of the disclosed embodiments. Hardware identifier device 300 can be embodied on a single monolithic chip, in one or more aspects. As a result, a common physical countermeasure shield (PCM shield) 350 can protect data and communication stored at hardware identifier device 300. Components of hardware identifier device 300 can communicate exclusively within an interior of the monolithic chip, in some disclosed aspects, insulating intra-chip communications from illicit access and enhancing reliability of data security. In one or more embodiments, hardware identifier device 300 can perform the functions of hardware identifier device(s) 230 of Figure 2, *supra*, although hardware identifier device 300 is not limited to the functionality disclosed at communication environment 200.

Hardware identifier device 300 can include a microcontroller unit (MCU) 320 and a volatile memory 310, as shown, and an MCU bus 315 for storing and retrieving operating data 312 at volatile memory 310. MCU 320 can include an embedded memory 322 (volatile or non-volatile) in one or more embodiments, which can include non-volatile on-chip ReMEM, in some embodiments. Volatile memory 310 can be utilized for operating data 312 associated with software or logic executed at MCU 320. Embedded memory 322 can store logic or code for interacting with secure element 330 over a SE bus 355. In some aspects, the logic or code can specify rules for complying with access control 357 limitations for interacting with secure element 330. Such limitations can include providing validation data validating MCU 320 as authorized to interact with secure element 330, or validating data validating a core of MCU 320 (*e.g*., where MCU 320 is a multi-core processing device) as authorized to interact with secure element 330, a validating data validating a process, thread, *etc.,* as authorized to interact with secure element 330, as defined by access control 357 on SE bus 355. Embedded memory 322 can include instructions for an authorized core, process, thread, *etc.,* to access secret storage 334 of embedded ReMEM 332 within secure element 330, including generating PUF data as identifier or proof or origin data for hardware identifier device 300, retrieving PUF data for validating proof of origin, digitally signing data with the proof of origin data for encrypting the digitally signed data (*e.g.*, as part of a communication for a device coupled to hardware identifier device 300), digitally decrypt data signed with the proof of origin data or signed with proof of origin data of another device (*e.g.*, a remote device, such as cloud device(s) 210 of Figure 2, *infra*) in communication with a device coupled to hardware identifier device 300, among other suitable identifier functions, proof of origin functions, root of trust functions, cryptographic functions, or security functions for securing data or communications over an unsecure network. Secret storage 334 can be defined for a portion of non-volatile embedded ReREM 332 to hold identifier data, proof of origin data, cryptographic key(s) or MPC key shares, data or algorithms for implementing a digital signature or decrypting digitally signed data, and the like.

In conjunction with generating (*e.g*., via PUF write command, or TRNG write command), storing or retrieving secure data, MCU 320 can communicate with secure element 330 over SE bus 355 without exposing such communications outside PCM shield 350. As disclosed herein, MCU 320 and volatile memory 310 can be embedded together with secure element 330 (and its sub-components) in a single monolithic chip on a single substrate, in various embodiments. This monolithic integration can enhance security of communications between MCU 320 and secure element 330.

Hardware identifier device 300 can include a physical interface 345 for short-range communicative coupling with a computing device (*e.g*., mobile device 220, cloud device(s) 210, among others: see for example Figures 6 and 7, *infra*)*.* Physical interface 345 can be limited to hardware communication protocols such as a short-range wired communication protocol (*e.g*., universal serial bus (USB), Ethernet bus, Firewire (IEEE 1394) bus, high speed Serial Peripheral Interface (SPI), a parallel interface, or the like; see Figure 10, *infra*)*.* In alternative or additional embodiments, an optional communication interface 340 can be provided. Optional communication interface 340 can be limited to a short-range wireless interface such as a Wi-Fi interface, a Bluetooth^{®} interface, a personal area network (PAN), a NFC interface, or similar. In at least one embodiment, optional communication interface 340 can be a dedicated and limited wide area network interface (*e.g.*, a limited Internet connection) having only a set of target Internet Protocol addresses for which communication is permitted, such as an IP address of a cloud service provider's server equipment (*e.g*., cloud device(s) 210 of Figure 2, *supra*)*.* Such an optional communication interface 340 can be utilized to connect to a backup or recovery server to retrieve stored backup security data, such as a backup of secret storage data 334, or a backup of a MPC key share(s) that when coupled at least in part with a key share(s) stored at secret storage 334 can facilitate execution of a MPC digital signature algorithm, to encrypt or decrypt data with a plurality of MPC key shares (*e.g*., see U.S. Patent Application No. 18/753,784 incorporated by reference hereinabove).

Figure 4 depicts a block diagram of an example integrated circuit device implemented as a hardware application device 400 on a single monolithic chip, according to various aspects of the disclosed embodiments. Hardware application device 400 can serve as a proof of origin device (*e.g*., similar to hardware identifier device(s) 230 of Figure 2 or hardware identifier device 300 of Figure 3, *supra*), as described herein. In addition, hardware application device 400 can include executable logic and memory for storing application instructions to implement application functions at hardware application device 400. As one example, hardware application device 400 can include executable logic and memory with instructions for storage and accounting of cryptocurrency assets at a secure memory, facilitate cryptocurrency transactions, validation of cryptocurrency transactions (*e.g*., on a blockchain), or other suitable cryptocurrency wallet functions. Many other applications can be executed at hardware application device 400 in other aspects of the disclosed embodiments, such as blockchain transaction functions, blockchain transaction validation functions, digital token transaction services, digital token transaction validation services, application services that involve smart contracts, such as data survey service functions, decentralized data storage services, data storage compression and decompression functions, decentralized computing services, DePIN services, and the like, and combinations thereof. Such functions can be implemented internally for hardware application device 400, can be implemented on behalf of a client device directly coupled to hardware application device 400 (*e.g.*, mobile device 220 of Figure 2, or cloud device(s) 210 of Figure 2), or can be implemented on behalf of a remote client device (*e.g.*, cloud device(s) 210) communicatively connected by way of a remote communication 242 to a computing device directly coupled to hardware application device 400 and operating as a server device for the remote client device. Described differently, server functions of the computing device (*e.g*., mobile device 220) operating as a server device in a client-server relationship with a client device (*e.g.*, cloud device(s) 210) over remote communication 242 can be outsourced in part or in whole to hardware application device 400 via physical interface 345 (or optional dedicated and limited communication interface 340).

Hardware application device 400 can include a microcontroller unit (MCU) 430, an on-chip non-volatile memory 420 (*e.g*., resistive memory: ReMEM, phase change memory (PCM), programmable metallization memory, magneto-resistive memory (MRAM), among others, which are referred to hereinafter as on-chip ReMEM 420 for convenience) and a volatile memory 410, as shown. MCU 430 can include an embedded memory 432 (volatile or non-volatile) in one or more embodiments, which can include at least a portion of on-chip ReMEM 420 or can be separate from and in addition to on-chip ReMEM 420, in further embodiments. On-chip ReMEM 420 can store application code for execution at MCU 430. Volatile memory 410 can be utilized for operating data associated with executing application code at MCU 430, at least a portion of which can also be stored at embedded memory 432, where suitable.

In conjunction with executing a cryptographic application(s), MCU 430 can communicate with a secure element 440. As disclosed herein, MCU 430, on-chip ReMEM 420 and volatile memory 410 can be embedded together with secure element 440 (and its sub-components) in a single monolithic chip on a single substrate, in various embodiments. This monolithic integration can enhance security of communications between MCU 430 and secure element 440. Moreover, secure element 440 can include hardware-encoded security, secret data or cryptocurrency-related algorithms 442 (which can include, *e.g*., digital signature algorithms, signature validation algorithms, blockchain validation algorithms, PUF data generation algorithms, MPC key share generation algorithms, MPC digital signature and signature validation algorithms, MPC encryption and decryption algorithms, *etc.*), or other algorithms for application security, user security, digital asset security, or digital transaction security, or suitable combinations of the foregoing, and are hereinafter referred to as hardware encoded security algorithms 442 for convenience.

Encoding of hardware encoded security algorithms 442 can be implemented primarily (although not necessarily exclusively) at manufacture. Hardware encoded can include hardware assisted security algorithms, as well as hardware accelerated security algorithms, or the like, or suitable combinations of the foregoing. This makes algorithms executed by hardware encoded security algorithms 442 largely immune to software-based malware, providing significant security. In addition, hardware encoding can achieve processing times far faster than a software processor, in some cases up to 10x faster or even more. As a general characteristic then, hardware encoded security algorithms 442 can significantly enhance both performance and security of computations performed at hardware application device 400.

Hardware-encoded logic primitives (which can also be referred to as atomic operations) can be executed independently to produce a result (*e.g.*, a result of an atomic algorithm or of the atomic operation). Moreover, these atomic operations can also be combined (*e.g*., executed in a sequence) to produce another algorithm, which can be referred to herein by extending the atomic analogy as a molecular operation (combining multiple atomic operations). This other algorithm is generally more complex as it combines multiple atomic operations (*e.g*., see Figure 5, *infra*)*.* Moreover, atomic operations can be combined in different sequences to produce other (unique) molecular operations, different from the prior molecular operation. Accordingly, encoding a plurality of hardware-logic segments to realize a set of atomic operations can be leveraged by MCU 430 to execute a fairly diverse set of algorithms, including cryptographic algorithms, blockchain algorithms, secure authentication or validation algorithms, and so on. As a brief illustrative example, three logic primitives can respectively define: a user authentication process, a cryptocurrency hash algorithm and a validation of a cryptocurrency transaction (although respective primitives can define subsets of one or more of these algorithms and combined in sequence to implement a single algorithm also). When executed separately, their respective functions are performed. When executed in combination and in sequence, however, more complex functions are performed. For example, the three logic primitives in combination can effect: a user authentication, cryptocurrency hash computation and a validation of a cryptocurrency transaction.

Hardware encoded security algorithms 442 can be executed in response to a command(s) received at secure element 440 from MCU 430. Where embodying cryptographic primitives, hardware encoded security algorithms 442 can receive commands (or command arguments) specifying a sequence order of executing a plurality of primitives that implement an algorithm more complex than individual primitives. Moreover, different subsets of primitives or different sequences, or combinations thereof, can each implement different algorithms as described herein or as would be known in the art or reasonably conveyed to one of ordinary skill in the art by way of the context provided herein.

In a particular example, hardware encoded security algorithms 442 can include hardware logic encoding MPC digital signature and signature validation algorithms (referred to hereinafter as MPC sign and validation algorithms 443A). MPC sign and validation algorithms 443A can be utilized to generate or participate in generation of secret data and secret data segments (*e.g*., key shares) for MPC digital signature applications and MPC signature validation applications. By encoding MPC sign and validation algorithms 443A in hardware encoded logic, even as a set of logic primitives as introduced above, highly intensive MPC digital signature and MPC signature validation processes can be executed quickly and efficiently, enhancing user experience of such processes when utilizing hardware application device 400. Hardware encoded security algorithms 442 can also include zero knowledge proof (ZKP) algorithms 443B, authentication algorithms 443C such as FIDO2, or the like, post-quantum cryptography (PQC) algorithms 443D (in addition to MPC sign and validation algorithms 443A, ZKP algorithms 443B and authentication algorithms 443C, where suitable), and other suitable algorithms 443E known in the art or reasonably conveyed to one of ordinary skill in the art by way of the context disclosed herein.

Illustrative examples of algorithms that can be encoded into hardware encoded security algorithms 442 can include public key signature algorithms, authentication and key derivation algorithms, key agreement algorithms, hash algorithms, encryption algorithms, secret sharing algorithms, homomorphic encryption algorithms, atomic acceleration for ZKP algorithms 443B, and the like, and suitable combinations of the foregoing. As further (but non-limiting) examples, public key signature algorithms can include Elliptic Curve Digital Signature Algorithm (ECDSA), Schnorr signature algorithm, Edwards-curve Digital Signature Algorithm (EdDSA), among others. Authentication and key derivation algorithms can include, among others: Hash-based Message Authentication Code (HMAC) and Password-Based Key Derivation Function 1 (PBKDF1) or PBKDF2. A suitable key agreement algorithm can be an Elliptic-Curve Diffie-Hellman (ECDH) algorithm, whereas suitable hash algorithms can include: Secure Hash Algorithm (SHA), SHA-0, SHA-1, SHA-2, SHA-3, Research and development in Advanced Communications technologies in Europe (RACE) Integrity Primitives Evaluation (RIPE) Message Digest algorithm (RIPEMD) 160 (RIPEMD-160), RIPEMD-256, RIPEMD-320, BLAKE2, BLAKE3, BLAKE-256, BLAKE-224, BLAKE-512, BLAKE-384, and so on. Still further, suitable encryption algorithms can include: Advanced Encryption Standard (AES), ChaCha20, Salsa20, Poly1305, ChaCha20-Poly1305, and others. Secret sharing algorithms can include: Shamir's Secret Sharing (SSS), Verifiable Secret Sharing (VSS), as well as others, and homomorphic encryption can include a Paillier cryptosystem, among others.

Secure element 440 can include an embedded ReMEM 446. Embedded ReMEM 446 can include a secret storage 448 that includes secret data (*e.g*., identifier data, proof of origin data, root of trust data, PUF data, and so on). In at least one embodiment, embedded ReMEM 446 can optionally be set to no read / no write to prevent access to secret storage 448. In such embodiment(s), embedded ReMEM 446 can have limited processing logic to process a simple query associated with the secret data stored in secret storage 448, without exposing the secret data external to embedded ReMEM 446. The simple query can confirm a hash algorithm, confirm an encryption/decryption result, or the like, initiated with the secret data or in conjunction with the secret data (*e.g.*, in a MPC algorithm utilizing the secret data in part with other secret data). In other embodiments, embedded ReMEM 446 can permit access to secret storage 448 on a limited basis. For example, hardware encoded security algorithms 442 can be permitted to access secret storage 448, but nothing external to secure element 440, in an embodiment(s). Secure element 440 (or embedded ReMEM 446) can be configured to differentiate commands, data requests, and the like, originating at hardware encoded security algorithms 442 from requests originating external to secure element 440, in such embodiment(s). In other embodiments, such differentiation can be implemented at access control 447 (see below).

In some embodiments, embedded ReMEM 446 can include circuitry for in-memory processing (or processing in-memory: PIM). PIM circuitry can be incorporated within embedded ReMEM 446 can facilitate one or more logic or mathematical operations or sequences of logic or mathematical operations within or immediately adjacent to (*e.g.*, coupled to sense circuits, or the like) an array structure of embedded ReMEM 446. PIM circuitry can be responsive to hardware encoded security algorithms 442 of secure element 440, in some embodiments, or can be responsive to commands from MCU 430 (authorized by access control 447) in further embodiments.

In one or more embodiments, secure element 440 can include optional volatile memory 444. Optional volatile memory 444 can be utilized as working memory to store values, logic states, logic conditions, *etc.,* of hardware encoded security algorithms 442. As one example, where a hardware encoded security algorithm 442 involves execution of multiple logic primitives, a data value(s) resulting from execution of a first logic primitive (*e.g*., a MPC signature validation) can be held at optional volatile memory 444 and accessed by a subsequent logic primitive (*e.g*., a cryptocurrency transaction depending on successful MPC signature validation) to produce a second data value(s), and so on.

In some embodiments of the present disclosure, hardware application device 400 can include an optional communication interface 450. Optional communication interface 450 can be configured to provide limited communication with an external device, or network. This limited communication can facilitate participation in an MPC algorithm, such as MPC secret data generation, MPC digital signature or MPC signature validation, or backup or recovery of MPC key shares, or the like. Alternatively, or in addition, this limited communication can facilitate receipt and storage of an encrypted secret data segment(s) (and associated decryption data) of one or more computing devices participating in MPC secret data generation and segmentation. In yet another example, this limited communication can facilitate transmission of an encrypted secret data segment generated in part by hardware application device 400 and associated decryption data to another device for backup storage. In still further examples, this limited communication can facilitate login to a recovery service and recovery of an encrypted secret data segment and associated decryption data, to recover data lost by another hardware application device 400 at hardware application device 400 so that the latter can participate in a MPC algorithm, or to facilitate recovery of such encrypted secret data segment and decryption data for another computing device to participate in the MPC algorithm. In at least some embodiments, the limited communication can facilitate validation of a device against data stored at secret storage 448, authentication of user credentials, executing a cryptographic algorithm, participating in a blockchain validation algorithm, or participating in a multi-party computation (MPC) process associated with any of the foregoing or associated with a like operation.

In some embodiments, a physical interface 455 is provided to communicatively couple hardware application device to an external computing device, such as mobile device 220 or cloud device(s) 210 of Figure 2, *supra.* Physical interface 455 can employ any suitable physical communication protocol or form factor, such as a short-range wired communication protocol (*e.g*., universal serial bus (USB), Ethernet bus, Firewire (IEEE 1394) bus, high speed Serial Peripheral Interface (SPI), a parallel interface, SD interface, mini-SD interface, micro-SD interface, or the like; see also Figure 10, *infra*)*.* In other embodiments, an optional communication interface 450 can be provided for a limited or a short-range wireless interface such as a Wi-Fi interface, a Bluetooth^{®} interface, a personal area network (PAN), a NFC network, or similar. In at least one embodiment, optional communication interface 450 can be a dedicated and limited wide area network interface (*e.g.*, a limited Internet connection) having only a set of target Internet Protocol addresses for which communication is permitted, such as an IP address of a cloud service provider's server equipment (*e.g*., cloud device(s) 210 of Figure 2, *supra*) for backup or recovery of MPC key share data, device validation functions, or other suitable security, backup or recovery functions.

Internally, hardware application device 400 can provide different communication bus structures for communications among components thereof. An MCU bus 435 can provide communications between MCU 430 and volatile memory 410 and on-chip ReMEM 420. MCU bus 435 can be an unrestricted bus, facilitating all suitable electronic communication between a processor and memory(ies) as known in the art. In addition, an SE bus 445 can facilitate communication between MCU 430 and SE 440. In at least some embodiments, SE bus 445 can be a limited communication bus governed at least in part by an access control 447. For instance, where MCU 430 is a multi-core processor, SE bus 445 can be permitted by access control 447 to facilitate communication between MCU 430 and SE 440 originating at a first core of the multi-core processor (*e.g.*, an authorized core; a core having a valid authorization code, *etc.*) and can be restricted by access control 447 from communication between MCU 430 and SE 440 originating at a second core of the multi-core processor (*e.g*., an unauthorized core; a core not having the valid authorization code, *etc.*)*.* As another example, access control 447 can permit communication between MCU 430 and SE 440 for an application, a process, or a logic thread being executed by MCU 430 that is authorized to communicate with SE 440, or for a process or logic being executed at hardware encoded security algorithms 442 that is authorized to communicate with MCU 430, or to utilize MCU 430 and optional communication interface 450 to communicate with an external device(s) (*e.g*., participate in a MPC data generation, signature, signature validation, backup or recovery process), or a suitable combination of the foregoing (*e.g.*, see U.S. Patent Application No. 18/218,948, incorporated by reference hereinabove, at Figures 3-5 and associated written descriptions, among others thereof).

Figure 5 depicts a secure processing environment 500 including a microcontroller unit (MCU) 530 and a secure element 540 operable as a state machine, in one or more embodiments of the present disclosure. Moreover, MCU 530 and secure element 540 can both be physically embodied on a single monolithic chip, on a single substrate (as opposed, *e.g.*, to a MCU embodied on a first substrate that is bonded to a second substrate in which a secure element is embodied). This can allow electrical signal communications between MCU 530 and secure element 540 to be physically located entirely within an interior volume of monolithic chip 510 without conductive exposure outside of monolithic chip 510. In various embodiments, these electrical signal communications can be conveyed by conductive lines within etched pathways connecting MCU 530 within one portion of monolithic chip 510 to secure element 540 within another portion of monolithic chip 510. In further embodiments, the electrical signal communications can be conveyed by conductive lines such as vertical interconnects disposed within vias between a first layer of a monolithic chip 510 on which MCU 530 resides and a second layer on which secure element 540 resides, where at least a portion of the second layer overlies (or underlies) the first layer of the monolithic chip 510. In yet other embodiments, a suitable combination of the foregoing conductive lines can be implemented (*e.g*., lines horizontally within a layer, vertically between layers, and suitable connections therebetween or combinations thereof). Further, portions of monolithic chip 510 that are important to carrying out these communications (*e.g*., logic associated with MCU 530, with hardware logic and accelerators 542, or an embedded ReMEM 446 and secret storage 448, or the like) can be placed between the conductive lines and exterior surfaces of monolithic chip 510. As a result, attempts to illicitly drill, cut, grind, remove, excavate or otherwise access the conductive lines within the interior volume of monolithic chip 510 from an exterior thereof risk destroying portions of monolithic chip 510 required to implement the electrical signal communication. This can disincentivize such illicit access, further improving upon secure communications between MCU 530 and secure element 540.

As shown in secure processing environment 500, MCU 530 can issue a control signal 550 to atomic operations 544 to execute an algorithm embodied by a plurality of atomic operations 544. As shown, atomic operations 544 include a first atomic operation: atomic operation₁ 544A, a second atomic operation: atomic operation₂ 544B, through an N^{th} atomic operation: atomic operation_{N} 544C where N is an integer greater than one (referred to herein collectively as: atomic operations 544A - 544C). The plurality of atomic operations 544 that execute the algorithm can include any two or more atomic operations 544A - 544C in a sequence. A data signal 560 resulting from execution of a first atomic operation in the sequence (*e.g*., atomic operation₁ 544A in the example shown in Figure 5) can be output to a second atomic operation in the sequence (*e.g*., atomic operation₂ 544B in Figure 5), which can operate upon data signal 560. Further data signals 562 produced by atomic operation₂ 544B and any additional atomic operations in the sequence can result in a data signal received at a final atomic operation in the sequence (*e.g*., atomic operation_{N} 544C in the example shown). Execution of the final atomic operation results in a reply control signal 552 provided to MCU 530 in response to control signal 550.

In an alternative (or additional) embodiment, control signal 560 can be returned to MCU 530 in response to control signal 550. MCU 530 can then provide a data value (or logic state, or logic condition, or other result) of control signal 560 with a separate control signal 550A (not depicted) to atomic operation₂ 544B, instead of control signal 560 being supplied directly from atomic operation₁ 544A and received at atomic operation₂ 544B. Likewise, further data signals 562 provided by atomic operation₂ 544B and any additional atomic operations in a sequence can respectively be provided to MCU 530, which can issue data values (or logic states, or logic conditions or other result(s)) to other respective atomic operations with separate control signals 550A. Thus, instead of a single control signal 560 and reply response signal 552 between atomic operations 544 and MCU 530, MCU 530 can interact with individual atomic operations 544A - 544C to implement a sequence of operations, in such embodiments.

As introduced briefly above, different pluralities of atomic operations 544A - 544C can implement different algorithms, and different sequences of implementing a given plurality of atomic sequences 544A - 544C, in at least some embodiments, can implement different algorithms again, and suitable combinations of the foregoing can implement still other algorithms in alternative or additional embodiments. Not all atomic operations 544 are necessarily required to implement at least some algorithms. To illustrate: atomic operation₁ 544A followed by atomic operation_{N} 544C in a first sequence can implement a first algorithm; atomic operation_{N} 544C followed by atomic operation₁ 544A (a second sequence) can implement a second algorithm; atomic operation₂ 544B followed by atomic operation₁ 544A and then atomic operation_{N} 544C in a third sequence can implement a third algorithm, and so on.

In the embodiment(s) shown by secure processing environment 500, MCU 530 interacts with secure element 540 with control signals 550 and 552. Data signals 560 and 562 between atomic operations 544 implementing a command identified in control signal 550 are not available to MCU 530. Moreover, MCU 530 can have or cannot have direct communication with atomic operations 544, in different aspects of the disclosed embodiments.

Figure 6 illustrates an example peer-to-peer (P2P) network 600 according to additional embodiments of the present disclosure. P2P network 600 can be secured with respective proof of origin devices provided to each computing device operating within P2P network 600. Proof of origin devices can include, *e.g*., hardware identifier device(s) 230 of Figure 2, hardware identifier device 300 of Figure 3, or hardware application device 400 of Figure 4, or any suitable combinations thereof. Proof of origin devices can provide a connected computing device with proof of possession and proof of origin for other computing devices coupled to P2P network 600. Proof of origin devices can also serve as verifiable and trusted hardware devices. For instance, proof of origin data can be supplied by a computing device from a connected proof of origin device to any other computing device connected to P2P network 600. That proof of origin data can then be verified at an authenticated manufacturer's server device, or other public or private verification modality, to verify whether the proof of origin data matches a device supplied by the authenticated manufacturer. In addition, proof of origin devices can be utilized to facilitate multi-party computation algorithms among a plurality of computing devices of P2P network 600 to generate MPC cryptographic key shares for such plurality of computing devices, to facilitate encryption of data transmissions among the plurality of computing devices on P2P network 600. Different subsets of computing devices can generate different MPC cryptographic keys on demand and without limit in one or more embodiments. Thus, device verification and data encryption can be an on-demand function of P2P network 600, allowing devices to connect to and disconnect from P2P network 600 without limit. When connecting, a proof of origin request can be supplied validating proof of possession and proof of origin of a proof of origin device associated within a computing device connecting to P2P network 600. Cryptographic key shares can then be generated with interconnected devices facilitating an on-demand cryptographic environment with various subsets of computing devices as an application-level service. Thus, computing devices can join P2P network 600 as a client in a client-server relationship with one or more other computing devices, can join P2P network 600 as a server in a second client-server relationship with one or more additional computing devices, or any suitable combination of the foregoing.

As shown, P2P network 600 includes a personal computer 602A and associated proof of origin (PoO) device 612A, and various other types of computing devices. Included is a cloud server 602D and PoO device 612D, a smart phone 602B and PoO device 612B and mobile device 602C and PoO device 612C. Likewise, a cell phone 602F and PoO device 612F and laptop 602E and PoO device 612E are also illustrated. Computing devices 602A, 602B, 602C, 602D, 602E, 602F are hereinafter referred to collectively as computing devices 602A - 602F, and PoO devices 612A, 612B, 612C, 612D, 612E, 612F are hereinafter referred to collectively as PoO devices 612A - 612F. A number of computing devices 602A - 602F connected to P2P network 600 can be theoretically unlimited, subject only to availability of network hardware (or software, firmware, *etc.*) to interconnect the devices. Moreover, various computing devices 602A - 602F can be connected by different network connection modalities, including cellular networks, public switched telephone network(s) (PSTN(s)), DSL networks, cable networks, private local area and wide area networks, the Internet, and other suitable networks known in the art or reasonably conveyed to one of ordinary skill in the art by way of the context provided herein. P2P network 600 can be coupled with one or more service networks, such as a blockchain network and application service networks. In further embodiments, one or more of computing devices 602A - 602F can be an application service computing device or a gateway device to an application service network, or other suitable connection to shared, networked or bundled application computing services.

Because P2P network 600 utilizes PoO devices 612A - 612F to validate and authenticate nodes connected thereto, computing devices 602A - 602F can be interchangeable on P2P network 600. Thus, a person who possesses PoO device 612F can utilize cell phone 602F to connect to and interact with other computers 602A - 602F on P2P network 600, or can exchange cell phone 602F for another suitable computing device (a laptop device, a tablet device, a smart phone device, a desktop computer, a could service device, and so on). Moreover, the person possessing PoO device 612F can engage in client-server interactions with other computers 602A - 602F (and PoO devices 612A - 612F) - including as a client in the client-server relationship, as a serve in the client-server relationship, or combinations thereof, with other suitable computing devices. By establishing proof of origin or proof or possession by way of PoO device 612F, the person need not be tied to a particular computing device in order to connect a computing device to P2P network, but rather merely requires possession of PoO device 612F and any suitable computing device configured to communicate with PoO device 612F and other computers in a networking environment (*e.g*., an internet protocol (IP) network, a transport control protocol (TCP) network, a transport control protocol/Internet protocol (TCP/IP) network, a cellular interconnected network, a satellite communication network, or any other suitable interconnection mechanism for computing devices 602A - 602F). Described differently, validation of nodes connected to P2P network 600 can be independent of computing devices 602A - 602F, and rely on PoO devices 612A - 612F instead. Proof of possession of PoO devices 612A - 612F can serve as the proxy for proof of user/possessor rather than (or at least in addition to) computing devices 602A - 602F.

Validation of a computing device 602A - 602F on P2P network 600 can be in response to providing PoO data (or data derived from the PoO data) of a corresponding PoO device 612A - 612F as described herein. Moreover, PoO data of a first PoO device 612A - 612F previously used to validate a first computing device 602A - 602F, can subsequently be used to validate a second computing device 602A - 602F in response to the second computing device 602A - 602F submitting the PoO data (or, *e.g.,* data derived from the PoO data) of the first PoO device 612A - 612F on P2P network 600 following the PoO device 612A - 612F decoupling from the first computing device 602A - 602F and coupling instead to the second computing device 602A - 602F. The PoO data can be submitted, *e.g*., in response to a proof of possession query of a third computing device 602A - 602F on P2P network 600. The third computing device 602A - 602F connected to P2P network 600 that successfully validates the PoO data can then authenticate or validate the second computing device 602A - 602F. Optionally, the third computing device 602A - 602F can also de-authenticate the first computing device 602A - 602F in response to authenticating the second computing device 602A - 602F utilizing the (same) PoO data (or data derived from the PoO data) of the PoO device 612A - 612F.

Figure 7 depicts a block diagram of an example secure peer-to-peer network and blockchain 700 according to still further embodiments of the present disclosure. Secure P2P network 600 is shown, which can be substantially as described above at Figure 6. P2P network 600 is integrated with or (in part) forms a blockchain having one or more blockchain components 730. The blockchain can be any suitable blockchain, such as a cryptocurrency blockchain (*e.g*., Bitcoin blockchain, Ethereum^{®} blockchain, and so forth) and can be integrated with third-party integrated application services 710. Integrated application services 710 can include a (software) wallet service(s) 712, a blockchain oracle service(s) 714 (*e.g.,* for providing trusted real-world data to blockchain components 730 that are managed, governed or facilitated by various smart contracts 740), delegated service(s) 716, DePIN service(s) 718, among others. In at least some embodiments, one or more integrated application services 710 can be supplied by a computing device 602A - 602F of P2P network 600, utilizing the proof of possession and device validation available through an associated PoO device 612A - 612F.

An example of an integrated application service 710 that can be supplied by third party application services or a computing device 602A - 602F of P2P network 600 can include a versatile on-chain (blockchain components 730 implemented by smart contract(s) 740) and off-chain (integrated application service 710 or P2P network 600 service) MPC application service. The MPC application service can facilitate generation of MPC key shares among a plurality of PoO devices 612A - 612F and computing devices 602A - 602F. The MPC application service can serve as a trusted party of a MPC algorithm for instance, as well as a MPC key encryption partner or MPC key decryption partner. The MPC application service can also facilitate MPC key share backup and recovery services utilizing an N x M MPC algorithm, where M is a total number of key shares and N is a smaller number (N < M) of valid key shares required to digitally sign, encrypt or decrypt, *etc.,* data utilizing the N X M MPC algorithm. The N x M MPC algorithm enables fewer than all key shares to engage in transactions with encrypted assets, giving a user of a computing device 602A - 602F full control over the assets, while offering high powered and highly flexible encryption technology to secure such assets.

A second example of integrated application service 710 that can be supplied by third party application services or a computing device 602A - 602F of P2P network 600 can include online survey services. The online survey service(s) can submit data requests (*e.g*., questions to be answered) to computing devices 602A - 602F and upon receipt of data satisfying the data request assign a digital asset (*e.g.*, cryptocurrency, digital token, digital coupon, *etc.*) to an account associated with the computing device 602A - 602F. Data can be encrypted in transmission within P2P network 600, as well as within integrated application service 710 networks (where the survey service leverages an integrated application service 710 rather than another computing device 602A - 602F of P2P network 600). The online survey service(s) can be coupled with a blockchain component 730 and smart contract 740 to ensure an antecedent condition(s) is properly met (*e.g.*, receipt of data satisfying the data request) and proper rewards are distributed for users who satisfy the data request (*e.g*., transfer of a cryptocurrency token 746 to an account on vault 744 associated with the computing device 602A - 602F). Proof of Origin data of PoO devices 612A - 612F can also facilitate follow-up data request submissions to computing devices 602A - 602F as well as (anonymous) know your customer applications, without a user of a computing device having to surrender private information, such as name, email address, phone number, and so on. Still further, proof of origin data of PoO devices 612A - 612F can substantially mitigate or avoid completely submission of data requests to bot accounts and undesired activation of smart contract resources (*e.g*., cryptocurrency, digital tokens, digital coupons, ...) to spoofed computing devices, bot devices, or other devices not associated with an actual user.

Other examples of integrated application service 710 can include privacy-preserving applications. These applications can include generating PUF data for anonymous authentication without revealing blockchain addresses. Another example can include facilitating proof of origin services without revealing private data (*e.g.*, an associated proof of origin data or identifier data stored at a PoO device 612A - 612F) of a computing device 602A - 602F. Still other applications can include physical infrastructure applications, such as redundant data storage or backup, distributing computation services, and shared networking capabilities.

As shown, blockchain components 730 can also include decentralized autonomous organizations (DAOs) 742 (or interconnection hardware to connect to a DAO(s)) managed by smart contract(s) 740. Also shown are vault services 744 for storing digital assets such as user cryptocurrencies (*e.g.*, cryptocurrency tokens 746) in associated user accounts (*e.g.*, assigned to a PoO device 612A - 612F, or a computing device 612A - 612F or a user, as suitable) also managed by smart contract(s) 740, and the cryptocurrency tokens 746 or other digital assets for satisfying conditional rewards defined by smart contract(s) 740 stored at vault 744. Smart contracts 740 can also govern bridge components 748 for interconnecting different blockchains and transactions among blockchains (*e.g*., a bridge 748 between the Bitcoin blockchain and Ethereum blockchain as one illustrative example in the cryptocurrency space), and for incorporation of integrated applications 710 (or P2P network 600 client services or server integration services) with such blockchains, as well as other components 749 as would be evident to one of skill in the art or reasonably conveyed to one of ordinary skill by way of the context provided herein.

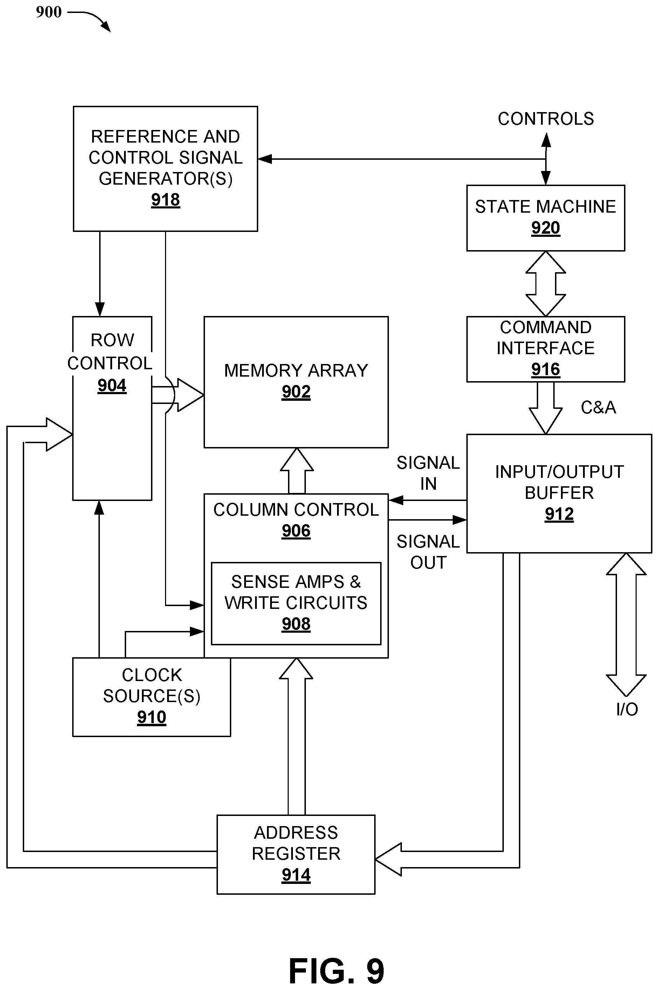

The diagrams included herein are described with respect to several electronic devices, computing devices, and a communication system facilitating proof of origin for edge device communication on unsecure networks. It should be appreciated that such diagrams can include those electronic or computing devices, communication systems, *etc.*, specified therein, some of the specified devices / systems, or additional devices / systems not explicitly depicted but known in the art or reasonably conveyed to those of skill in the art by way of the context provided herein. Components of disclosed integrated circuit devices can also be implemented as sub-components of another disclosed component (*e.g*., embedded memory 432 can be in part or in whole a sub-component of on-chip ReMEM 420; access control 447 can be integrated with SE bus 445, *etc.*), whereas other components disclosed as sub-components can be separate components in various embodiments (*e.g*., process/core control 118 can be separate from and communicatively connected to access control 116; embedded ReMEM 446 can be separate from and communicatively connected to secure element 440, and so forth). Further, embodiments within a particular Figure of the present specification can be applied in part or in whole to other embodiments depicted in other Figures without limitation, subject only to suitability to achieving a disclosed function or purpose as understood by one of skill in the art, and *vice versa.* As illustrative (and non-limiting) examples, hardware application device 400 can be substituted for hardware identifier device 230 of Figure 2 or proof of origin devices 612A - 612F of Figure 6; MCU 330 can incorporate some or all memory array control components of Figure 9 (*e.g.*, row control 904, sense amps 908, column control 906, clock source(s) 910, address register 914, reference and control signal(s) generator 918, state machine 920, input/output buffer 912, command interface 916), or suitable components of operating and control environment 900 or environment 1000 can be substituted or added to other components or integrated circuit devices disclosed herein, and so forth. Additionally, it is noted that one or more disclosed processes can be combined into a single process providing aggregate functionality. For instance, a cryptographic algorithm process can include a secure user/device authentication process, or *vice* versa, to facilitate device validation and encrypted data transmission on unsecure networks, by way of a single process. Components of the disclosed devices and systems can also interact with one or more other components not specifically described herein but known by or reasonably conveyed to those of skill in the art.

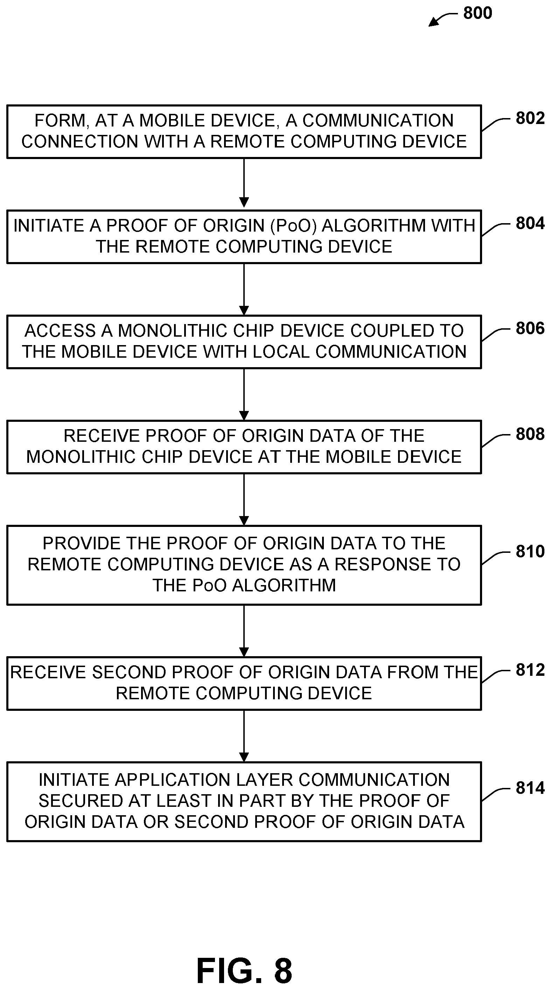

In view of the exemplary diagrams described *supra*, a process method(s) that can be implemented in accordance with the disclosed subject matter will be better appreciated with reference to the flow chart of Figure 8. While for purposes of simplicity of explanation, the method(s) of Figure 8 are shown and described as a series of blocks, it is to be understood and appreciated that the claimed subject matter is not limited by the order of the blocks, as some blocks may occur in different orders or concurrently with other blocks from what is depicted and described herein. Moreover, not all illustrated blocks may be required to implement the methods described herein, and in some embodiments additional steps known in the art or reasonably conveyed to one of ordinary skill in the art by way of the context provided herein can be implemented as part of a disclosed method within the scope of the present disclosure. Moreover, some steps illustrated as part of one process can be implemented for another process where suitable; other steps of one or more processes can be added or substituted in other processes disclosed herein within the scope of the present disclosure. Additionally, it should be further appreciated that the methods disclosed throughout this specification are capable of being stored on an article of manufacture to facilitate transporting and transferring such methods to an electronic device, stored in embedded memory within the electronic device, and so forth. The term article of manufacture, as used, is intended to encompass a computer program accessible from any computer-readable device, device in conjunction with a carrier, or storage medium, or the like.

Figure 8 illustrates a flowchart of an example method 800 for backup or recovery of a digital asset, in alternative or additional aspects of the presently disclosed embodiments. At 802, method 800 can comprise forming at a computing device a connection with a remote computing device. The remote computing device can be a server device, a laptop, a personal computer, a mobile device, a smart phone, a cell phone, a tablet computer, or any other suitable computing device, network of computing devices, distributed computing devices, and so on. The connection can be an unsecured network connection, or can be a public network connection, a private network connection, a peer-to-peer connection, or the like, or suitable combinations thereof. At 804, method 800 can comprise initiating a proof of origin (PoO) algorithm with the remote computing device. At 806, method 800 can comprise accessing a monolithic chip device coupled to the mobile device with local communication. The location communication can be a physical interface, or a short-range wireless interface. At 808, method 800 can comprise receiving proof of origin data of the monolithic chip device at the mobile device, and at 810, method 800 can comprise providing the proof of origin data to the remote computing device as a response to the PoO algorithm. Further, at 812, method 800 can comprise receiving second proof of origin data from the remote computing device, and at 814, method 800 can comprise initiating application layer communication secured at least in part by the proof of origin data or second proof of origin data.

In an embodiment, method 800 can further comprise accessing a public trusted server device by way of a second network connection, and uploading the second proof of origin data for validation at the public trusted server device. In yet another embodiment, method 800 can comprise initiating a MPC key generation algorithm with the remote computing device and optionally one or more additional computing devices to generate a plurality of MPC key shares. The method can further comprise encrypting the application layer communication utilizing the MPC key shares to facilitate securing the application layer communication at least in part by the proof of origin data or second proof of origin data.

### EXAMPLE OPERATING ENVIRONMENTS

Figure 9 illustrates a block diagram of an example operating and control environment 900 for a memory array 902 of a memory device according to aspects of the subject disclosure. Control environment 900 and memory array 902 can be formed within a single semiconductor die in some embodiments, although the subject disclosure is not so limited and in other embodiments some components of control environment 900 can be formed on a separate semiconductor die communicatively connected with the semiconductor die. In at least one aspect of the subject disclosure, memory array 902 can comprise memory selected from a variety of memory cell technologies. In at least one embodiment, memory array 902 can comprise a two-terminal memory technology, arranged in a compact two or three-dimensional architecture. Suitable two-terminal memory technologies can include resistive-switching memory, conductive-bridging memory, phase-change memory, organic memory, magneto-resistive memory, or the like, or a suitable combination of the foregoing. In a further embodiment, the two-terminal memory technology can be a two-terminal resistive switching technology.

A column controller 906 and sense amps 908 can be formed adjacent to memory array 902. Moreover, column controller 906 can be configured to activate (or identify for activation) a subset of bit lines of memory array 902. Column controller 906 can utilize a control signal(s) provided by a reference and control signal generator(s) 918 to activate, as well as operate upon, respective ones of the subset of bitlines, applying suitable program, erase or read voltages to those bitlines. Non-activated bitlines can be kept at an inhibit voltage (also applied by reference and control signal generator(s) 918), to mitigate or avoid bit-disturb effects on these non-activated bitlines.

In addition, operating and control environment 900 can comprise a row controller 904. Row controller 904 can be formed adjacent to and electrically connected with word lines of memory array 902. Also utilizing control signals of reference and control signal generator(s) 918, row controller 904 can select one or more rows of memory cells with a suitable selection voltage. Moreover, row controller 904 can facilitate program, erase or read operations by applying suitable voltages at selected word lines.

Sense amps 908 can read data from, or write data to, the activated memory cells of memory array 902, which are selected by column control 906 and row control 904. Data read out from memory array 902 can be provided to an input/output buffer 912. Likewise, data to be written to memory array 902 can be received from the input/output buffer 912 and written to the activated memory cells of memory array 902.

A clock source(s) 910 can provide respective clock pulses to facilitate timing for read, write, and program operations of row controller 904 and column controller 906. Clock source(s) 910 can further facilitate selection of word lines or bit lines in response to external or internal commands received by operating and control environment 900. Input/output buffer 912 can comprise a command and address input, as well as a bidirectional data input and output. Instructions are provided over the command and address input, and the data to be written to memory array 902 as well as data read from memory array 902 is conveyed on the bidirectional data input and output, facilitating connection to an external host apparatus, such as a computer or other processing device (not depicted, but see *e.g.,* computer 1002 of Figure 10, *infra*)*.*

Input/output buffer 912 can be configured to receive write data, receive an erase instruction, receive a status or maintenance instruction, output readout data, output status information, and receive address data and command data, as well as address data for respective instructions. Address data can be transferred to row controller 904 and column controller 906 by an address register 914. In addition, input data is transmitted to memory array 902 *via* signal input lines between sense amps 908 and input/output buffer 912, and output data is received from memory array 902 *via* signal output lines from sense amps 908 to input/output buffer 912. Input data can be received from the host apparatus, and output data can be delivered to the host apparatus *via* the I/O bus.

Commands received from the host apparatus can be provided to a command interface 916. Command interface 916 can be configured to receive external control signals from the host apparatus and determine whether data input to the input/output buffer 912 is write data, a command, or an address. Input commands can be transferred to a state machine 920.

State machine 920 can be configured to manage programming and reprogramming of memory array 902 (as well as other memory banks of a multi-bank memory array). Instructions provided to state machine 920 are implemented according to control logic configurations, enabling state machine 920 to manage read, write, erase, data input, data output, and other functionality associated with memory cell array 902. In some aspects, state machine 920 can send and receive acknowledgments and negative acknowledgments regarding successful receipt or execution of various commands. In further embodiments, state machine 920 can decode and implement status-related commands, decode and implement configuration commands, and so on.

To implement read, write, erase, input, output, *etc.*, functionality, state machine 920 can control clock source(s) 910 or reference and control signal generator(s) 918. Control of clock source(s) 910 can cause output pulses configured to facilitate row controller 904 and column controller 906 implementing the particular functionality. Output pulses can be transferred to selected bit lines by column controller 906, for instance, or word lines by row controller 904, for instance.

In connection with Figure 10, the systems, devices, and/or processes described herein can be embodied within hardware, such as a single integrated circuit (IC) chip, multiple ICs, an application specific integrated circuit (ASIC), a computing device or devices, a server device or array of server devices such as implemented in a networked server (or cloud) service, or the like. Further, the order in which some or all of the process blocks appear in each process should not be deemed limiting. Rather, it should be understood that some of the process blocks can be executed in a variety of orders, not all of which may be explicitly illustrated herein.

With reference to Figure 10, a suitable environment 1000 for implementing various aspects of the claimed subject matter includes a computer 1002. Computer 1002 includes a processing unit 1004, a system memory 1010, a codec 1014, and a system bus 1008. The system bus 1008 couples system components including, but not limited to, the system memory 1010 to the processing unit 1004. The processing unit 1004 can be any of various available processors. Dual microprocessors and other multiprocessor architectures also can be employed as the processing unit 1004.

The system bus 1008 can be any of several types of bus structure(s) including the memory bus or memory controller, a peripheral bus or external bus, or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), Small Computer Systems Interface (SCSI), Compute eXpress Link (CXL), high speed Serial Peripheral Interface (SPI) interfaces (*e.g*., HyperFlash, and so forth), Inter-Integrated Circuit (I²C) communication protocol, I³C protocol, *etc.*

The system memory 1010 includes volatile memory 1010A and non-volatile memory 1010B. The basic input/output system (BIOS), containing the basic routines to transfer information between elements within the computer 1002, such as during start-up, is stored in non-volatile memory 1010B. In addition, according to present innovations, codec 1014 may include at least one of an encoder or decoder, wherein the at least one of an encoder or decoder may consist of hardware, software, or a combination of hardware and software. Although codec 1014 is depicted as a separate component, codec 1014 may be contained within non-volatile memory 1010B. By way of illustration, and not limitation, non-volatile memory 1010B can include read only memory (ROM), programmable ROM (PROM), electrically programmable ROM (EPROM), electrically erasable programmable ROM (EEPROM), or flash memory, two-terminal memory, and so on. Volatile memory 1010A includes random access memory (RAM), and in some embodiments can embody a cache memory. By way of illustration and not limitation, RAM is available in many forms such as static RAM (SRAM), dynamic RAM (DRAM), synchronous DRAM (SDRAM), double data rate SDRAM (DDR SDRAM), and enhanced SDRAM (ESDRAM).

Computer 1002 may also include removable/non-removable, volatile/non-volatile computer storage medium. Figure 10 illustrates, for example, disk storage 1006. Disk storage 1006 includes, but is not limited to, devices like a magnetic disk drive, solid state disk (SSD) floppy disk drive, tape drive, Jaz drive, Zip drive, LS-100 drive, flash memory card, or memory stick. In addition, disk storage 1006 can include storage medium separately or in combination with other storage medium including, but not limited to, an optical disk drive such as a compact disk ROM device (CD-ROM), CD recordable drive (CD-R Drive), CD rewritable drive (CD-RW Drive), a digital versatile disk ROM drive (DVD-ROM), a Blu-Ray Disc^{®}, and so forth. To facilitate connection of the disk storage devices 1006 to the system bus 1008, a removable or non-removable interface is typically used, such as storage interface 1012. It is appreciated that storage devices 1006 can store information related to a user. Such information might be stored at or provided to a server or to an application running on a user device. In one embodiment, the user can be notified (*e.g.*, by way of output device(s) 1032) of the types of information that are stored to disk storage 1006 or transmitted to the server or application. The user can be provided the opportunity to opt-in or opt-out of having such information collected and/or shared with the server or application (*e.g*., by way of input from input device(s) 1042).

It is to be appreciated that Figure 10 describes software that acts as an intermediary between users and the basic computer resources described in the suitable operating environment 1000. Such software includes an operating system 1006A. Operating system 1006A, which can be stored on disk storage 1006, acts to control and allocate resources of the computer system 1002. Applications 1006C take advantage of the management of resources by operating system 1006A through program modules 1006D, and program data 1006D, such as the boot/shutdown transaction table and the like, stored either in system memory 1010 or on disk storage 1006. It is to be appreciated that the claimed subject matter can be implemented with various operating systems or combinations of operating systems.

A user enters commands or information into the computer 1002 through input device(s) 1042. Input devices 1042 include, but are not limited to, a pointing device such as a mouse, trackball, stylus, touch pad, keyboard, keypad, touch screen, microphone, joystick, game pad, satellite dish, scanner, TV tuner card, digital camera, digital video camera, web camera, and the like. These and other input devices connect to the processing unit 1004 through the system bus 1008 *via* input port(s) 1040. Input port(s) 1040 include, for example, a serial port, a parallel port, a game port, and a universal serial bus (USB). Output device(s) 1032 uses some of the same type of ports as input device(s) 1042. Thus, for example, a USB port may be used to provide input to computer 1002 and to output information from computer 1002 to an output device 1032. Output adapter 1030 is provided to illustrate that there are some output devices 1032 like monitors, speakers, and printers, among other output devices 1032, which require special adapters. The output adapters 1030 include, by way of illustration and not limitation, video and sound cards that provide a means of connection between the output device 1032 and the system bus 1008. It should be noted that other devices and/or systems of devices provide both input and output capabilities such as remote computer(s) 1038.

Computer 1002 can operate in a networked environment using logical connections to one or more remote computers, such as remote computer(s) 1024. The remote computer(s) 1024 can be a personal computer, a server, a router, a network PC, a workstation, a microprocessor based appliance, a peer device, a smart phone, a tablet, or other network node, and typically includes many of the elements described relative to computer 1002. For purposes of brevity, only a memory storage device 1026 is illustrated with remote computer(s) 1024. Remote computer(s) 1024 is logically connected to computer 1002 through a network 1022 and then connected *via* communication interface(s) 1020. Network 1022 encompasses wire or wireless communication networks such as local-area networks (LAN) and wide-area networks (WAN) and cellular networks. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication interface(s) 1020 refers to the hardware/software employed to connect the network 1022 to the bus 1008. While communication interface(s) 1020 is shown for illustrative clarity inside computer 1002, it can also be external to computer 1002. The hardware/software necessary for connection to the network 1022 includes, for exemplary purposes only, internal and external technologies such as, modems including regular telephone grade modems, cable modems and DSL modems, ISDN adapters, and wired and wireless Ethernet cards, hubs, and routers.

The illustrated aspects of the disclosure may also be practiced in distributed computing environments where certain tasks are performed by remote processing devices that are linked through a communications network (*e.g*., a multi-party computation (MPC) process or algorithm). In a distributed computing environment, program modules or stored information, instructions, or the like can be located in local or remote memory storage devices.

Moreover, it is to be appreciated that various components described herein can include electrical circuit(s) that can include components and circuitry elements of suitable value in order to implement the embodiments of the subject disclosure. Furthermore, it can be appreciated that many of the various components can be implemented on one or more IC chips. For example, in one embodiment, a set of components can be implemented in a single IC chip. In other embodiments, one or more of respective components are fabricated or implemented on separate IC chips.

In regard to the various functions performed by the above described components, architectures, circuits, processes and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the embodiments. In this regard, it will also be recognized that the embodiments include a system as well as a computer-readable medium having computer-executable instructions for performing the acts and/or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising".

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. The block diagrams of the architecture and flow charts are grouped for ease of understanding. However, it should be understood that combinations of blocks, additions of new blocks, re-arrangement of blocks, and the like are contemplated in alternative embodiments of the present disclosure.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. An electronic communication apparatus, comprising:
a communication interface facilitating communication by way of a network with a remote device, the communication including application layer interaction between the communication interface and the remote device;
a processor for executing instructions pertaining to implementing the communication;
a storage medium containing the instructions;
an internal communication bus coupled to the storage medium and to the processor facilitating data and command communication between the processor and the storage medium;
an application layer communication module including security logic configured to facilitate secure communications between the remote device and the electronic communication apparatus as part of the application layer interaction; and
an integrated circuit device containing proof of origin data that is unique or substantially unique to the integrated circuit device, wherein the integrated circuit device is coupled to the internal communication bus and provides the proof of origin data to the processor for transmission on the communication interface in response to a query received over the communication interface from the remote device.

2. The electronic communication apparatus of claim 1, wherein the processor utilizes the proof of origin data in conjunction with executing the security logic of the application layer communication module for identifying the electronic communication apparatus with the remote device and for securing the application layer interaction of the communication.

3. The electronic communication apparatus of claim 1, wherein the proof of origin data is root of trust data unique or substantially unique to the integrated circuit device, or data derived from the root of trust data.

4. The electronic communication apparatus of claim 1, wherein:
the proof of origin data is generated from a physical unclonable function (PUF) utilizing resistive switching cells integrated within the integrated circuit device; and
the integrated circuit device is a single monolithic integrated circuit in which the resistive switching cells are formed within the integrated circuit device as part of a monolithic fabrication process.

5. The electronic communication apparatus of claim 1, wherein the integrated circuit device is a removable device configured to couple to and decouple from the internal communication bus to facilitate connection to and disconnection from, respectively, the processor.

6. The electronic communication apparatus of claim 1, wherein the application layer communication module is configured to generate a cryptographic key or key pair utilizing the proof of origin data and generates a digital signature and digital certificate for the electronic communication device for securing the communications between the remote device and the electronic communication apparatus and the application layer interaction.

7. The electronic communication apparatus of claim 1, wherein:
the network is a peer-to-peer communication between the electronic communication apparatus and the remote device;
the application layer interaction facilitates client and server interaction between the remote device and the electronic communication device, including:
designating the remote device as a client device and the electronic communication apparatus as a server device for a first communication interaction; and
designating the remote device as the server device and the electronic communication apparatus as the client device for a second communication interaction.

8. The electronic communication apparatus of claim 1, wherein the application layer communication utilizes a multi-party computation (MPC) algorithm implemented at least at the electronic communication apparatus and the remote device to generate a MPC cryptographic key including at least: a first share of the MPC cryptographic key at the electronic communication apparatus and a second share of the MPC cryptographic key at the remote device, wherein the MPC cryptographic key is utilized to facilitate the secure communications between the remote device and the electronic communication apparatus.

9. The electronic communication apparatus of claim 1, wherein the MPC cryptographic key is utilized for a first communication session between the electronic communication apparatus and the remote device, and wherein a second communication session between the electronic communication apparatus and the remote device utilizes the MPC algorithm to generate a second MPC cryptographic key, or utilizes a second cryptographic algorithm to generate a second cryptographic key, for securing the second communication session.

10. An integrated circuit device, comprising:
a communication interface;
a microcontroller unit including a processor communicatively coupled to the communication interface;
a secure element comprising embedded memory including a non-volatile memory containing proof of origin data unique or substantially unique to the secure element; and
a secure element bus exclusively coupling the secure element with the microcontroller unit; wherein the microcontroller unit is configured to receive a query from an external computing device separate from the integrated circuit device on the communication interface and reply to the query with the proof of origin data, or data derived from the proof of origin data, to the external computing device over the communication interface.

11. The integrated circuit device of claim 10, wherein the proof of origin data is root of trust data, and wherein the data derived from the proof of origin data is a message authentication code derived from the root of trust data, and wherein the integrated circuit device further comprises:
access control configured to limit access to the proof of origin data at the secure element for communication between the secure element and the microcontroller unit on the secure element bus, wherein the integrated circuit device is fabricated on a single monolithic chip and the secure element bus provides secure intra-chip communication within the integrated circuit device between the microcontroller unit and the secure element; and
wherein the micronctroller unit is responsive to the query from the external computing device over the communication interface with the data derived from the proof of origin data, and wherein the data derived from the proof of origin data is generated from the proof of origin data by way of a derivation algorithm selected from the group consisting essentially of: a hash-based message authentication code (HMAC), a deterministic key derivation function (KDF) and a PoO derivation function.

12. The integrated circuit device of claim 10, wherein the communication interface facilitates electronic coupling of the integrated circuit device with a computing device and command and data communication between the computing device and the microcontroller unit.

13. The integrated circuit device of claim 10, wherein the non-volatile memory is a non-volatile resistive switching memory array, and the proof of origin data is generated from a portion of memory cells of the memory array by a physical unclonable function (PUF) and is stored in a secure data portion of the non-volatile resistive switching memory array.

14. The integrated circuit device of claim 10, wherein the secure element further comprises:
cryptographic key data formed from the proof of origin data;
logic configured to generate a digital signature with the cryptographic key data and generate digitally signed data; and
output the digitally signed data from the secure element to the microcontroller unit by way of the secure element bus for transmission to the external computing device on the communication interface.

15. The integrated circuit device of claim 10, wherein the secure element includes hardware acceleration logic configured to execute a security algorithm for securing data transmitted from the integrated circuit device, and wherein the security algorithm is a multi-party computation (MPC) cryptographic key generation algorithm, a zero knowledge proof (ZKP) algorithm, a homomorphic encryption, a digital signature algorithm or a signature validation algorithm.

16. The integrated circuit device of claim 10, coupled by way of the communication interface to the external computing device, wherein the external computing device is communicatively coupled to a remote computing device by a network connection, and wherein the external computing device and the remote computing device execute an application-layer communication.

17. The integrated circuit device of claim 16, wherein the proof of origin data is utilized to authenticate the external computing device at the remote computing device, or to secure the application-layer communication between the external computing device and the remote computing device, or both.

18. The integrated circuit device of claim 17, wherein the proof of origin data authenticates the external computing device over the network connection, and further wherein the remote computing device comprises a second integrated circuit device containing a second secure element comprising second proof of origin data, and wherein the second proof of origin data authenticates the remote computing device with the external computing device over the network connection.

19. A computing network, comprising:
a first computing device having:
a remote network communication interface; and
a short-range network connection;
an integrated circuit device comprising proof of origin data generated from resistive switching memory cells embedded within the integrated circuit device by way of a physical unclonable function (PUF), wherein the integrated circuit device is communicatively coupled to the first computing device by way of the short-range network connection;
a second computing device having:
a second remote network communication interface; and
a second short-range network connection;
a second integrated circuit device comprising second proof of origin data generated from second resistive switching memory cells embedded within the second integrated circuit device by way of the PUF or a second PUF, wherein the second integrated circuit device is communicatively coupled to the second computing device by way of the second short-range network connection; and
one or more interconnection devices communicatively connected to the remote network communication and to the second remote network communication interface to communicatively connect the first computing device with the second computing device, wherein:
the first computing device receives a query at the remote network communication interface for proof of possession from the second computing device and replies to the query with the proof of origin data or data derived from the proof of origin data.

20. The computing network of claim 19, further comprising a third computing device having a third remote communication interface configured to connect to the one or more interconnection devices and a third short-range network connection configured to communicatively couple to the integrated circuit device, and wherein:
in response to communicatively coupling the integrated circuit device to the third computing device by way of the third short-range network connection and decoupling the integrated circuit device from the short-range network connection of the first computing device, the second computing device:
sends a second query to the first computing device for validation data;
receives the proof of origin data or data derived from the proof of origin data from the third computing device in response to the second query; and
authenticates the third computing device and de-authenticates the first computing device.
